# EUROPEAN PATENT SPECIFICATION

(11) **EP 1 964 737 B1**
(45) Date of publication and mention of the grant of the patent: **07.12.2011**
(21) Application number: 08003546.2
(22) Date of filing: 27.02.2008
(51) Int. Cl.: B60T 8/32, B60T 8/26, B62L 3/08

(54) **Brake hydraulic pressure control apparatus for bar-handle vehicle**
Vorrichtung zur Steuerung des hydraulischen Bremsdruckes für ein Fahrzeug mit Lenker
Appareil de contrôle de pression hydraulique de freinage pour véhicule avec guidon

(30) Priority: 27.02.2007 JP 2007046415
(43) Date of publication of application: 03.09.2008
(73) Proprietor: NISSIN KOGYO CO., LTD., Ueda-shi, Nagano (JP)
(72) Inventor: Nakamura, Motoyasu c/o NISSIN KOGYO CO., LTD., Ueda-shi, Nagano (JP); Hamanaka, Takayuki c/o NISSIN KOGYO CO., LTD., Ueda-shi, Nagano (JP)
(74) Representative: HOFFMANN EITLE

(56) References cited:
- EP-A2- 1 277 635
- GB-A- 2 297 134
- JP-A- 2000 006 779
- JP-A- 2002 264 787
- JP-A- 2006 123 767
- JP-B- 3 457 190

## Description

### Field of the invention

The present invention relates to a brake hydraulic pressure control apparatus for a bar-handle vehicle.

### Related art

As a hydraulic circuit for a brake hydraulic pressure control apparatus to be used mainly in a bar-handle type vehicle such as a motor bicycle, a motor tricycle or an all-terrain vehicle (ATV), there is known a constitution (as referred to Patent Document 1 and Patent Document 2, for example), which can perform an anti-lock brake control on each wheel brake and also a brake control (as will be called the "interlocking brake control") for interlocking the wheel brakes of front and rear wheels.

This hydraulic circuit includes a brake line for braking one (e.g., the wheel brake of the rear wheel) of two front and rear wheel brakes, and a brake line for braking the other wheel brake (e.g., the wheel brake of the front wheel). Each brake line is equipped with an electromagnetic valve, a pump, a motor and so on, which are necessary for the anti-lock brake control or the interlocking brake control.

The brake hydraulic pressure control apparatus for the bar-handle vehicle, as known to be able to perform the interlocking brake control, is disclosed in Patent Document 3 and Patent Document 4. This brake hydraulic pressure control apparatus for the bar-handle vehicle of Patent Document 3 and Patent Document 4 controls the magnitude of the brake hydraulic pressure electrically, and includes a simulator for applying an operation reaction according to the stroke extent of a brake operation element, to the brake operation element, and a pump for applying the brake hydraulic pressure to the wheel brake.
[Patent Document 1] Japanese Patent Unexamined Publication JP-A-2000-6779 (Fig. 8)
[Patent Document 2] Japanese Patent Examined Publication JP-B-3,457,190 (Fig. 1)
[Patent Document 3] Japanese Patent Unexamined Publication No. JP-A-2002-264787
[Patent Document 4] Japanese Patent Unexamined Publication No. JP-A-2006-123767

In the brake hydraulic pressure control apparatuses for the bar-handle vehicle of Patent Document 1 and Patent Document 2, the brake hydraulic pressure is applied to both the wheel brakes by the interlocking brake control, even when the driver operates only one of the brake operation elements. Pulsations resulting from the motions of the pump are transmitted to the other brake operation element. Therefore, the operation feeling of the other brake operation element may be deteriorated, when the other brake operation element is operated after one brake operation element was operated.

In the brake hydraulic pressure control apparatus for the bar-handle vehicle of Patent Document 3 and Patent Document 4, the passage of brake fluid from the master cylinder to the wheel brake is isolated so that the pulsations due to the motions of the pump do not transmit to the brake operation element. Even at an ordinary brake operating time when neither an anti-lock brake control nor the interlocking brake control is executed, an artificial operation reaction, as reproduced by a simulator, is applied to the brake operation element. This fails to satisfy the driver who desires a feeling that he or she is operating the wheel brake directly.

EP 1 277 635 A2 relates to an interlocking brake control device for a motorcycle in which it is not possible for the driver to directly operate the rear wheel cylinder during interlocking brake control.

### SUMMARY OF THE INVENTION

From these points of view, the present invention has an object to provide a brake hydraulic pressure control apparatus for a bar-handle vehicle, in which a brake hydraulic pressure is made, at an ordinary brake operating time, to act on the wheel brake by the operation of a brake operation element, and in which the operation feeling of a brake operation element corresponding to a brake line under an interlocking brake control is hardly deteriorated even when the brake operation element is operated while the interlocking brake control is being executed.

The present invention relates to a brake hydraulic pressure control apparatus for a bar-handle vehicle as defined in independent claim 1. Advantageous further embodiments are recited in the dependent claims.

In order to solve this problem, according to the invention, there is provided a brake hydraulic pressure control apparatus for a bar-handle vehicle, including:
two brake lines including hydraulic pressure passages leading from master cylinders to wheel brakes for generating brake hydraulic pressures according to stroke extents of brake operation elements;
a determining unit which determines whether or not it is necessary to apply the brake hydraulic pressure to the wheel brake corresponding to the other of the brake lines in response to an operation of the brake operation element corresponding to one of the brake lines; and
an interlocking brake control unit which executes an interlocking brake control on the other of the wheel brake lines, when the determining unit determines that it is necessary to apply the brake hydraulic pressure to the other of the wheel brakes,
at least the other of the brake lines of the brake hydraulic pressure control apparatus includes:
   a regulator having a cut valve for opening/closing the hydraulic pressure passages;
   a suction passage bypassing the regulator;
   a pump disposed in the suction passage for sucking brake fluid on a master cylinder side and discharging the brake fluid to a wheel brake side; and
   a suction valve for opening/closing the suction passage on a suction side of the pump;
the brake hydraulic pressure control apparatus is characterized in that:
   the determining unit also determines that a pump halt condition has established, when a physical quantity correlating to the brake hydraulic pressure of the master cylinder corresponding to the other of the brake lines which is target of the interlocking brake control,
   the interlocking brake control unit executes a control to close the cut valve, a control to open the suction valve and a control to drive the pump as the interlocking brake control, and when the determining unit determines that the pump halt condition has established, the interlocking brake control unit executes a control to stop the driven pump.

Here, the physical quantities correlating the brake hydraulic pressure of the master cylinder includes an output value of a pressure sensor disposed in a passage or the like communicating with the master cylinder and also estimated values of the brake hydraulic pressure, as estimated by various sensors, and a output value of the stroke sensor attached to the brake operation element.

According to this brake hydraulic pressure control apparatus for the bar-handle vehicle, when the interlocking conditions do not establish, the brake hydraulic pressure according to the stroke extent of each brake operation element is applied to each wheel brake. When the interlocking conditions establish, the interlocking brake control is executed so that the brake hydraulic pressure raised by the pump is applied to the wheel brake. In the invention, however, the pump is stopped when the physical quantity correlating to the brake hydraulic pressure of the master cylinder corresponding to the other brake line or the target of the interlocking brake control becomes the threshold value or higher. Even when the other brake operation element is operated while the interlocking brake control is being executed but after the physical quantity reached the threshold value, the pulsations due to the motions of the pump are not generated, so that the operation feeling of the other brake operation element is not deteriorated.

In the invention, moreover, the pump is stopped when the physical quantity becomes the threshold value or higher, so that the braking force can be enhanced by the interlocking brake control till the physical quantity reaches the threshold value. In other words, the interlocking brake control can be continued, if the brake operation element corresponding to the brake line which is target of the interlocking brake control is just touched by the driver.

The regulator is preferred to allow the inflow of the brake fluid from the master cylinder side to the wheel brake side when the brake hydraulic pressure on the master cylinder side is higher than the brake hydraulic pressure on the wheel brake side. Thus, when the brake hydraulic pressure of the master cylinder in the other of the brake lines which is target of the interlocking brake control becomes the brake hydraulic pressure applied to the wheel brake of the other of the brake lines by the interlocking brake control or higher, the brake hydraulic pressure corresponding to the stroke extent of the brake operation element corresponding to the other of the brake lines is applied to the wheel brake corresponding to the other of the brake lines. As a result, it is possible to give the driver a feeling that the wheel brake is directly operated.

According to a preferred embodiment of the invention, the suction valve opened by the interlocking brake control may be closed, when the condition (as will be called the "shift condition") that the physical quantity correlating to the brake hydraulic pressure of the master cylinder of the other of the brake lines reaches the physical quantity correlating to the brake hydraulic pressure applied to the wheel brake of the other of the brake lines. Specifically, the determining unit may be provided with a function to determine whether or not the shift condition has established, and the interlocking brake control unit may also be provided with a function to execute the control to close the suction valve opened by the interlocking brake control, when the determining unit determines that the shift condition has established.

If the brake hydraulic pressure on the side closer to the master cylinder than the regulator were made higher than the brake hydraulic pressure on the wheel brake side by the driver's operation of the brake operation element corresponding to the brake line under the interlocking brake control, the brake fluid would flow into the wheel brake side through the regulator. While the suction valve left open, however, the brake fluid will flows to the wheel brake side through the regulator and also the suction passage. As a result, the operation reaction of the brake operation element may be decreased to deteriorate the operation feeling. If the suction valve is closed, however, the brake fluid will flow to the wheel brake side through only the regulator. As a result, the decreasing degree of the operation reaction of the brake operation element can be reduced to keep the operation feeling satisfactory.

According to a preferred embodiment of the invention, at least the other of the brake lines further includes a stroke simulator for applying the operation reaction of the brake operation element corresponding to the brake line, artificially to the brake operation element, a branch passage leading from the hydraulic pressure passage closer to the master cylinder side than the regulator, to the stroke simulator, and a change-over valve for opening/closing the blanch passage.
In this case, the change-over valve may be opened to provide the communication between the hydraulic pressure passage and the stroke simulator, when the interlocking brake control is started, and the change-over valve may be closed to isolate the stroke simulator from the hydraulic pressure passage when the shift condition establishes. Specifically, the determining unit may be provided with a function to determine whether or not the shift condition establishes, and the interlocking brake control unit may be provided with the function to execute the control (i.e., the control to provide the communication between the hydraulic pressure passage and the stroke simulator) to open the change-over valve, when the interlocking brake control is started, and the function to execute the control (i.e., the control to isolate the stroke simulator from the hydraulic pressure passage) to close the change-over valve, when the determining unit determines that the shift condition has established.

Thus, when the brake operation element corresponding to the other brake line is operated after the interlocking brake control was executed on that brake line, the operation reaction is applied to the brake operation element by the stroke simulator before the shift condition establishes. After the shift condition established, the operation reaction is applied to the brake operation element by the brake hydraulic pressure to act on the wheel brake. As a result, the driver can be given the operation feeling like that at the ordinary brake operation time when the interlocking brake control is not executed. Here, all the operation reactions of the brake operation element are not simulated by the stroke simulator, so that the stroke simulator can be reduced in size.

When the stroke simulator is provided, the one-way valve for allowing only the inflow of the brake fluid from the stroke simulator side to the master cylinder side may be disposed in parallel with the change-over valve. Thus, even when the change-over valve is closed, the brake fluid having flown into the stroke simulator can be returned to the master cylinder.

When the other brake line includes the stroke simulator, the other of the brake lines includes an isolating valve for opening/closing the hydraulic pressure passage on the side closer to the regulator than a connection point between the hydraulic pressure passage and the branch passage, and a reservoir connected to the hydraulic pressure passage on the regulator side closer to the isolating valve, and the interlocking brake control unit may be additionally provided with a function to execute the control to close the isolating valve (that is, the control to isolate the reservoir from the master cylinder), when the interlocking brake control is started, and a function to execute the control to open the isolating valve (that is, the control to provide the communication between the reservoir and the master cylinder of the other of the brake lines, when the determining unit determines that the pump halt condition has established.

Thus, while the interlocking brake control is being executed, the hydraulic pressure passage is closed by the isolating valve, so that the transmission of the pulsations of the pump to the brake operation element can be completely isolated. Moreover, the isolating valve is closed when the interlocking brake control is started, and the brake fluid reserved in the reservoir is used only for the interlocking brake control. Therefore, the size of the reservoir can be made smaller than that of the case (that is, the "full by-wire" case), in which the brake hydraulic pressure is also raised by the pump when in the ordinary brake operation time. Even when the isolating valve is provided, the operation reaction is applied to the brake operation element by the stroke simulator so long before the shift condition establishes, but after the shift condition by the brake hydraulic pressure acting on the wheel brake. As a result, the driver can be given the operation feeling like that of the ordinary brake operation, in which the interlocking brake control is not executed. Incidentally, the pump sucks the brake fluid reserved in the reservoir.

When the isolating valve is disposed in the hydraulic pressure passage in the other brake line, a one-way valve may be disposed in parallel with the isolating valve, for allowing only the inflow of the brake fluid from the master cylinder side to the regulator side. Thus, when the brake hydraulic pressure not less than the valve opening pressure of the one-way valve is generated by the operation of the brake operation element, the brake fluid flows to the wheel brake side through the one-way valve, even if the isolating valve is closed, so that the operation response can be improved.

According to the invention, after one brake operation element was operated to execute the interlocking brake control, the operation feeling of the other brake operation element is hardly deteriorated even when the other brake operation element is operated.

### BRIEF DESCRIPTION OF THE DRAWINGS

Fig. 1 is a hydraulic circuit diagram of a brake hydraulic pressure control apparatus according to a first embodiment of the invention;
Fig. 2 is a block diagram for explaining functions of the brake hydraulic pressure control apparatus according to the first embodiment of the invention;
Fig. 3 is a diagram showing the state of a hydraulic circuit in an interlocking brake control;
Fig. 4 is a diagram showing a state of a hydraulic circuit after a shift condition established;
Fig. 5 is a flow chart for explaining a control flow of the brake hydraulic pressure control apparatus according to the first embodiment of the invention;
Fig. 6A is a graph showing the time changes of a wheel pressure;
Fig. 6B is a graph showing the time changes of a master pressure;
Fig. 6C is a graph showing the working situations of a pump;
Fig. 6D is a graph showing the opening/closing states of a suction valve;
Fig. 6E is a graph showing the opening/closing states of a cut valve;
Fig. 7 is a hydraulic circuit diagram of a brake hydraulic pressure control apparatus according to a second embodiment of the invention;
Fig. 8 is a block diagram for explaining functions of the brake hydraulic pressure control apparatus according to the second embodiment of the invention;
Fig. 9 is a diagram showing a state of a hydraulic circuit in an interlocking brake control;
Fig. 10 is a diagram showing a state of the hydraulic circuit after a pump halt condition established;
Fig. 11 is a flow chart for explaining a control flow of the brake hydraulic pressure control apparatus to the second embodiment of the invention;
Fig. 12 is a hydraulic circuit diagram showing a modification of the brake hydraulic pressure control apparatus according to the second embodiment of the invention;
Fig. 13 is a hydraulic circuit diagram of a brake hydraulic pressure control apparatus according to a third embodiment of the invention;
Fig. 14 is a block diagram for explaining functions of the brake hydraulic pressure control apparatus according to the third embodiment of the invention;
Fig. 15 is a diagram showing the state of a hydraulic circuit in an interlocking brake control;
Fig. 16 is a diagram showing a state of the hydraulic circuit after a pump halt condition established; and
Fig. 17 is a flow chart for explaining a control flow of the brake hydraulic pressure control apparatus according to the third embodiment of the invention.

### DETAILED DESCRIPTION OF THE PREFERED EMBODIMENTS

### (First Embodiment)

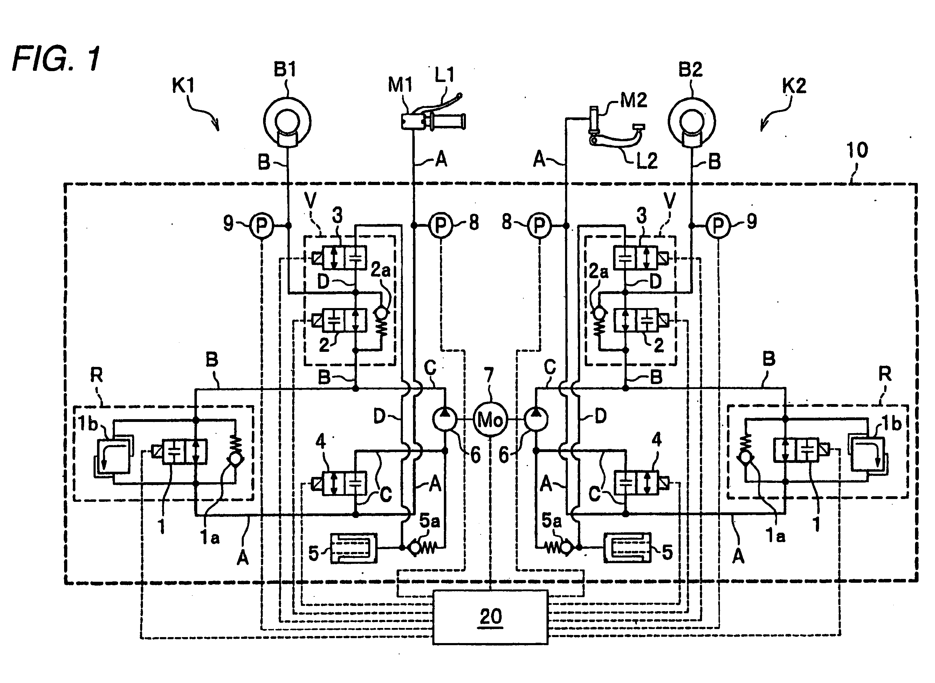

A brake hydraulic pressure control apparatus for a bar-handle vehicle according to a first embodiment is suitably used in a bar-handle type vehicle such as a motor bicycle, a motor tricycle or an all-terrain vehicle (ATV). As shown in Fig. 1, the brake hydraulic pressure control apparatus includes: a hydraulic unit 10 having various parts such as electromagnetic valves and pumps, and passages for a brake fluid; and a control unit 20 for controlling the various parts of that hydraulic unit 10. The brake hydraulic pressure control apparatus can execute the independent anti-lock brake controls of wheel brakes B1 and B2, and interlocking brake controls for interlocking the two wheel brakes B1 and B2.

The bar-handle vehicle brake hydraulic pressure control apparatus includes a brake line K1 for braking a front wheel, and a brake line TC2 for braking a rear wheel. The brake line K1 is equipped with hydraulic pressure passages A and B, which lead from a master cylinder M1 for generating a brake hydraulic pressure according to the stroke extent of a brake operation element L1 to the wheel cylinder of the wheel brake B1 of the front wheel. Likewise, the brake line K2 is equipped with hydraulic pressure passages A and B, which lead from a master cylinder M2 for generating a brake hydraulic pressure according to the stroke extent of a brake operation element L2 to the wheel cylinder of the wheel brake B2 of the rear wheel.

Here, this embodiment exemplifies the case, in which the brake operation element L1 corresponding to the brake line K1 is a brake lever whereas the brake operation element L2 corresponding to the brake line K2 is a brake pedal. However, this exemplification is not intended to limit the mode of the brake operation elements.

The master cylinders M1 and M2 have the not-shown cylinders, to which tank chambers reserving the brake fluid are connected. In these cylinders, there are combined the not-shown rod pistons, which are slid in the axial direction of the cylinders by the operations of the brake operation elements L1 and L2 thereby to feed out the brake fluid.

Thus, the bar-handle vehicle brake hydraulic pressure control apparatus includes the two brake lines K1 and K2. However, these brake lines K1 and K2 have the identical constitutions. In the following, the brake line K1 of the front wheel is mainly described, and the brake line K2 of the rear wheel is suitably described.

The brake line K1 of the front wheel is equipped with a regulator R, control valve unit V, a suction valve 4, a reservoir 5, a pump 6, a first pressure sensor 8 and a second pressure sensor 9.

In the following, the hydraulic pressure passage from the master cylinder M1 to the regulator R is called the "output hydraulic pressure passage A", and the passage from the regulator R to the wheel brake B 1 is called the "wheel hydraulic pressure passage B". Moreover, the passage bypassing the regulator R, that is, the passage for providing the communication between the output hydraulic pressure passage A and the wheel hydraulic pressure passage B is called the "suction passage C", and the passage leading from the wheel hydraulic pressure passage B to the reservoir 5 is called the "open passage D". Moreover, the "upstream side" means the side of the master cylinder M1 (M2), and the "downstream side" means the side of the wheel brake B 1 (B2).

The regulator R has functions of:
switching an inflow state where the brake fluid flows from the output hydraulic pressure passage A to the wheel hydraulic pressure passage B and a block state where such the inflow of the brake fluid is cut off;
adjusting the brake hydraulic pressure on the downstream side of the regulator R to a predetermined value or lower when the inflow of the brake fluid from the output hydraulic pressure passage A to the wheel hydraulic pressure passage B is blocked; and
allowing the inflow of the brake fluid from the upstream side to the downstream side (that is, from the output hydraulic pressure passage A to the wheel hydraulic pressure passage B) when the brake hydraulic pressure on the upstream side becomes higher than the brake hydraulic pressure on the downstream side. The regulator is configured to have a cut valve 1, a check valve 1a and a relief valve 1b.

The cut valve 1 opens/closes the hydraulic pressure passage (i.e., the output hydraulic pressure passage A and the wheel hydraulic pressure passage B) for providing the communication between the master cylinder M1 and the wheel brake B1. The cut valve 1 is made of a normally open electromagnetic valve interposed between the output hydraulic pressure passage A and the wheel hydraulic pressure passage B so that it allows the flow the brake fluid, when in an open state, but blocks when in a closed state.
The normally open electromagnetic valve constituting the cut valve 1 is electrically connected, at an electromagnetic coil for driving its valve member, with the control unit 20. The normally open electromagnetic valve is closed, when the electromagnetic coil is energized on the basis of the command from the control unit 20, and it opened when the electromagnetic coil is deenergized. Here, the cut valve 1 according to this embodiment is made of a linear type electromagnetic valve capable of controlling an ON/OFF valve.

The check valve 1a is a one-way valve for allowing only the inflow of the brake fluid from its upstream side to its downstream side, and is disposed in parallel with the cut valve 1.

The relief valve 1b is opened when the value calculated by subtracting the brake hydraulic pressure of the output hydraulic pressure passage A from the brake hydraulic pressure of the wheel hydraulic pressure passage B becomes the valve opening pressure or higher. This function of the relief valve 1b is added to the normally closed electromagnetic valve as a function in this embodiment. Here, the valve opening pressure of the relief valve 1b (the valve opening pressure of the cut valve 1) can be raised or lowered by controlling the magnitude of the current value to be fed to the electromagnetic coil for driving the electromagnetic valve.

The control valve unit V has a function to switch:
a state where the open passage D is blocked while the wheel hydraulic pressure passage B is being opened;
a state where the open passage D is opened while the wheel hydraulic pressure passage B is being blocked; and
a state where the wheel hydraulic pressure passage B and the open passage D are blocked.
The control valve unit V is constituted to have an inlet valve 2, a check valve 2a and an outlet valve 3.

The inlet valve 2 is made of a normally open electromagnetic valve disposed in the wheel hydraulic pressure passage B, and allows the passage of the brake fluid, when opened, but blocks when closed. The normally open electromagnetic valve constituting the inlet valve 2 is electrically connected, at an electromagnetic coil for driving its valve member, with the control unit 20. This normally open electromagnetic valve is closed, when the electromagnetic coil is energized on the basis of a command from the control unit 20, and opened when the electromagnetic coil is deenergized.

The check valve 2a is a valve for allowing only the inflow of the brake fluid from its downstream side to its upstream side, and is disposed in parallel with each inlet valve 2.

The outlet valve 3 is made of a normally closed electromagnetic valve disposed in the open passage D. The inflow of the brake fluid from the side of the wheel brake B1 is blocked when the outlet valve 3 is closed and the inflow is allowed when the outlet valve is opened. The normally closed electromagnetic valve constituting the outlet valve 3 is electrically connected, at an electromagnetic coil for driving its valve member, with the control unit 20. The normally closed electromagnetic valve is opened, when the electromagnetic coil is energized on the basis of a command from the control unit 20, and closed when the electromagnetic coil is deenergized.

The suction valve 4 opens/closes the suction passage C on the suction side of the pump 6, and is made of a normally closed electromagnetic valve in this embodiment. Specifically, the suction valve 4 switches the state where the suction passage C is opened, and the state where the same is closed. When the suction valve 4 is opened, it establishes the state where the master cylinder M1 and the suction port of the pump 6 communicate with each other. The normally closed electromagnetic valve constituting the suction valve 4 is electrically connected, at an electromagnetic coil for driving its valve member, with the control unit 20. This normally closed electromagnetic valve is opened, when the electromagnetic coil is energized on the basis of a command from the control unit 20, and closed when the electromagnetic coil is deenergized.

A reservoir 5 is provided at an end of the open passage D, and functions to temporally store the brake fluid which is released by opening the respective the outlet valves 3. Further, a check valve 5a, which only allows inflow of the brake fluid from the reservoir side to the pump 6 side, is disposed on a fluid passage which communicates the reservoir 5 with the suction valve of the pump 6.

The pump 6 is provided in the suction passage C. The pump 6 is driven by rotation force of the motor 7. The pump 7 sucks the brake fluid on an upstream side (master cylinder M1 side) and discharges it to a downstream side (wheel brake B1 side). The pump 6 is driven at the time of antilock brake control, and discharges the brake fluid which are temporally stored in the reservoir 5 to the wheel hydraulic pressure passage B side to thereby recover pressure state of the decompressed output hydraulic pressure passage A and/or wheel hydraulic pressure passage B.
Further, the pump 6 is also driven at the time of interlocking brake, and as described later, sucks the brake fluid on the upstream side and discharge it to the downstream side to thereby apply brake hydraulic pressure on the wheel brake B 1.
Note that since the pump 6 includes a one-way valve which allows only inflow of brake fluid from the suction side to the discharge side, even if the brake hydraulic pressure on the discharge side becomes higher than that on the suction side, there is no fear that the brake fluid back flows. Further, at the discharge side of the pump 6, now-shown damper and/or orifice is provided and they cooperate together to reduce the pulsation of the brake fluid discharged from the pump 6.

Here, the motor 7 is a power source, which is common to the pump 6 in the brake line K1 of the front wheel and the pump 6 in the brake line K2 of the rear wheel, and which acts on the basis of a common from the control unit 20.

The first pressure sensor 8 measures the magnitude of the brake hydraulic pressure in the output hydraulic pressure passage A. The brake hydraulic pressure measured by the first pressure sensor 8 is a physical quantity relating to the brake hydraulic pressure in the master cylinder M1, and it can be substantially deemed as the brake hydraulic pressure in the master cylinder M1. Here, in the following description, the brake hydraulic pressure measured by the first pressure sensor 8 will be called the "master pressure". This master pressure is continuously introduced into the control unit 20, and is used for the interlocking brake control.

The second pressure sensor 9 measures the magnitude of the brake hydraulic pressure in the wheel hydraulic pressure passage B. The brake hydraulic pressure measured by the second pressure sensor 9 is a physical quantity relating to the wheel hydraulic pressure in the wheel brake B1 (in the wheel cylinder, more specifically), and it can be substantially deemed as the brake hydraulic pressure in the wheel brake B1. Here, in the following description, the brake hydraulic pressure measured by the second pressure sensor 9 will be called the "wheel pressure". This wheel pressure is continuously introduced into the control unit 20, and is used for the interlocking brake control.

On the basis of the various physical quantities such as the wheel velocities outputted from the not-shown wheel velocity sensors, the master pressure and the wheel pressures, the control unit 20 controls the opening/closing operations of the cut valve 1, the inlet valve 2, the outlet valve 3 and the suction valve 4, and the motor 7 (the pump 6 indirectly). The control unit 20 is equipped with a CPU (Central Processing Unit), a RAM, a ROM and an input/output circuit, and performs the operations to execute the anti-lock brake control and the interlocking brake control on the basis of the aforementioned physical quantities, the control programs stored in the ROM, various threshold values (reference values) and so on.

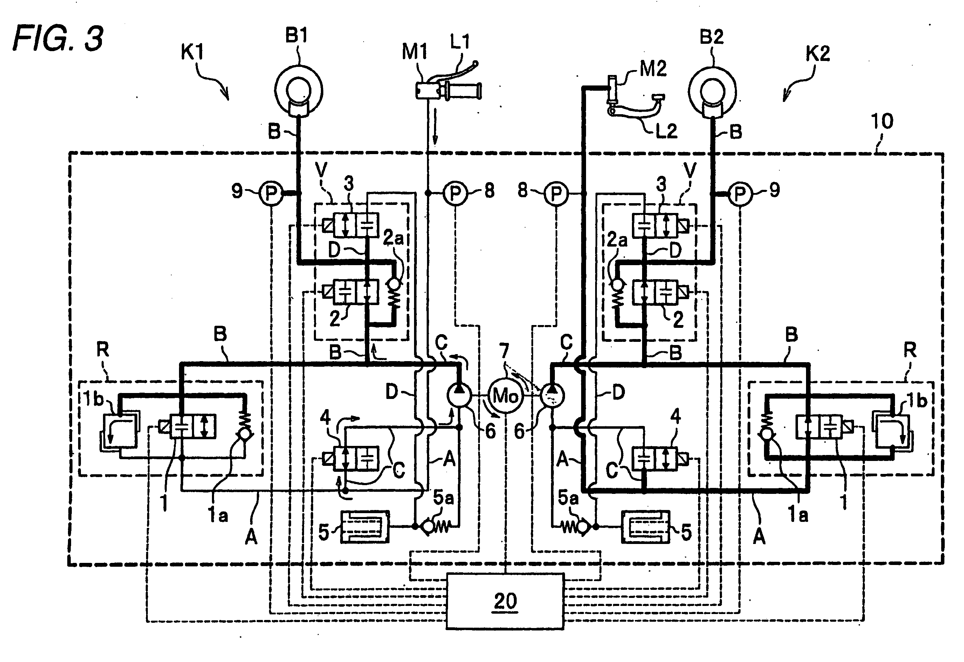

Here in the state (a normal set state), in which neither the anti-lock brake control nor the interlocking brake control is executed, the electromagnetic coil for driving the aforementioned electromagnetic valve is demagnetized to open the cut valve 1 and the inlet valve 2 and to close the outlet valve 3 and the suction valve 4. If the driver operates the brake operation elements L1 and L2 when the control unit 20 selects the normal set state, the brake hydraulic pressures, as generated in the master cylinders M1 and M2, are directly applied to the wheel brakes B1 and B2 (as referred to the brake line K2 of Fig. 3) via the output hydraulic pressure passage A and the wheel hydraulic pressure passage B.

The anti-lock brake control is executed when the wheels are to come into the locked states, and is realized by controlling the control valve unit V corresponding to the wheel brakes B1 and B2 of the wheels, as might otherwise come into the locked states, thereby to select suitably states where the brake hydraulic pressures on the wheel brakes B1 and B2 are decreased, increased or held constant. Which of the states among the increase, decrease and holding of the pressure is to be selected is determined by the control unit 20 on the basis of the wheel velocities obtained from the not-shown wheel velocity sensors. During the anti-lock brake control, the cut valve 1 is opened whereas the suction valve 4 is closed.

The anti-lock brake control is summarized in the following. The brake lines K1 and K2 are identical in their constitutions, as described hereinbefore. Here is exemplified the case, in which the anti-lock brake control is executed for the brake line K1.

When the brake hydraulic pressure acting on the wheel brake B1 is to be lowered by the anti-lock brake control, the inlet valve 2 in the brake line K1 is closed whereas the outlet valve 3 is opened. Thus, the brake fluid in the wheel hydraulic pressure passage B flows via the open passage D into the reservoir 5 so that the brake hydraulic pressure acting on the wheel brake B 1 falls. When the anti-lock brake control is to be executed, the pump 6 (directly the motor 7) is driven to return the brake fluid reserved in the reservoir 5 to the wheel hydraulic pressure passage B.

When the brake hydraulic pressure acting on the wheel brake B1 is to be held by the anti-lock brake control, the inlet valve 2 in the brake line K1 is closed, and the outlet valve 3 is also closed. Thus, the brake fluid is confined in the passage which is closed by the wheel brake B1, the inlet valve 2 and the exit valve 4. As a result, the brake hydraulic pressure acting on the wheel brake B1 is held constant.

When the brake hydraulic pressure acting on the wheel brake B1 is to be raised by the anti-lock brake control, the inlet valve 2 is opened whereas the outlet valve 3 is closed. Thus, the brake hydraulic pressure, as generated in the master cylinder M1, is applied to the wheel brake B1 via the output hydraulic pressure passage A and the wheel hydraulic pressure passage B so that the brake hydraulic pressure to act on the wheel brake B 1 rises.

The interlocking brake control is described in detail in the following.
This interlocking brake control includes
a control (as may be called the "rear interlocking brake control" in the following), in which the brake hydraulic pressure is applied to the wheel brake B1 corresponding to the brake line K1 of the front wheel while being interlocked with the operation of the brake operation element L2 corresponding to the brake line K2 of the rear wheel; and
a control (as may be called the "front interlocking brake control" in the following), in which the brake hydraulic pressure is applied to the wheel brake B2 corresponding to the brake line K2 of the rear wheel while being interlocked with the operation of the brake operation element L1 corresponding to the brake line K1 of the front wheel,
In the following description, the "rear interlocking brake control" and the "front interlocking brake control" will be called together as the "interlocking brake control", until they are not discriminated. Moreover, the rear interlocking brake control and the front interlocking brake control are identical in their basic operations, although they are different in the brake line to be controlled. Therefore, the following description is made mainly by presenting a specific example on the rear interlocking brake control, and a specific example is suitably omitted on the front interlocking brake control.

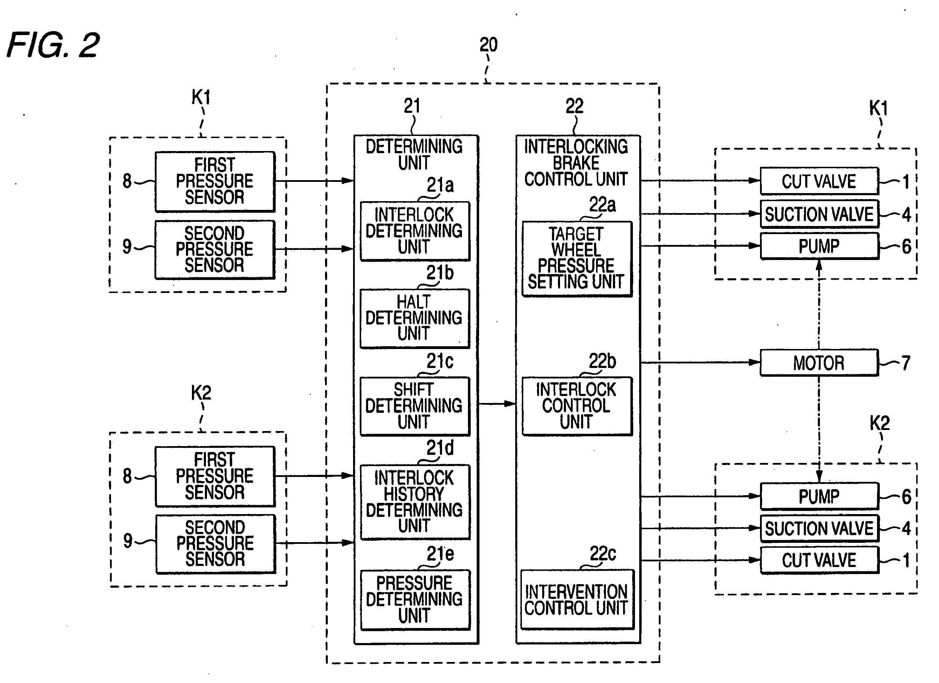

The interlocking brake control is executed, as shown in Fig. 2, by inputting the physical quantities such as the master pressure acquired by the first pressure sensor 8 or the wheel pressure acquired by the second pressure sensor 9, into the control unit 20 for functioning determination unit 21 and interlocking brake control unit 22.

The determining unit 21 includes an interlock determining unit 21a, a halt determining unit 21b, a shift determining unit 21c, an interlock history determining unit 21d and a pressure determining unit 21e.

The interlock determining unit 21a includes:
a function to determine whether or not it is necessary to apply the brake hydraulic pressure to the wheel brake B1 corresponding to the brake line K1 of one wheel (the front wheel) while being interlocked with the operation of the brake operation element L2 corresponding to the brake line K2 of the other wheel (the rear wheel) (that is, whether or not it is necessary to execute the interlocking brake control); and
a function to output the determination result to the interlocking brake control unit 22.
In this embodiment, it is determined that the rear interlocking brake control has to be executed when the following conditions (as will be called the "rear interlocking conditions") establish:
(a) the master pressure in the brake line K1 of the front wheel is lower than the later-described threshold value;
(b) the master pressure in the brake line K2 of the rear wheel is higher than zero; and
(c) the history that the master pressure in the brake line K1 of the front wheel becomes the threshold value or higher does not exist.
Here in this embodiment, there is exemplified the case, in which it is determined on the basis of the master pressure acquired (measured) by the first pressure sensors 8 of the brake lines K1 and K2 whether or not the interlocking brake control has to be executed, but this exemplification is not intended to limit the determining method. For example, when there is a stroke sensor for detecting the magnitudes of the stroke extents of the brake operation elements L1 and L2 or one of physical quantities relating to the brake hydraulic pressures of the master cylinders M1 and M2, whether or not it is necessary to execute the interlocking brake control may be determined on the basis of the magnitude of the stroke extent acquired by that stroke sensor.

The interlock determining unit 21a further has functions of;
determining whether or not it is necessary to end the interlocking brake control; and
outputting the determination result to the interlocking brake control unit 22.
In this embodiment, when there establishes the condition (as will be called the "ending condition") that the master pressure in the brake line K2 of the rear wheel has become zero (the operation on the brake operation element L2 of the brake line K2 of the rear wheel has ended), it is determined that it is necessary to end the rear interlocking brake control. In short, the interlock determining unit 21a in this embodiment determines whether or not it is necessary to end the rear interlocking brake control on the basis of the master pressure or the like in the brake line K2 of the rear wheel.

The halt determining unit 21b includes a function to determine whether or not it is necessary to stop the pump 6 of the brake line K1 (the motor 7) activated by the interlocking brake control, and a function to output the determination result to the interlocking brake control unit 22. In this embodiment, it is determined whether the pump 6 has to be stopped, when the condition (as will be called the "pump halt condition") that the master pressure of the brake line K1 which is the physical quantity correlating to the brake hydraulic pressure of the master cylinder M1 is not less than the threshold value stored in advance in the storage unit. In short, the halt determining unit 21b according to this embodiment determines it on the basis of the master pressure of the brake line K1 which is target of the rear interlocking brake control whether or not the pump 6 has to be stopped. Here, the threshold value may be set to "zero" or a value capable of eliminating the measurement error or the like of the first pressure sensor 8. In this embodiment, the threshold value is set to a value higher than the brake hydraulic pressure which is generated when the brake operation element L1 is lightly gripped.

The shift determining unit 21c includes a function to determine whether or not it is necessary to close the suction valve 4 of the brake line K1, as opened by the interlocking brake control, and a function to output the determination result to the interlocking brake control unit 22. In this embodiment, it is determined that the suction valve 4 of the brake line K1 has to be closed, when there establishes the condition (as will be called the "shift condition") that the master pressure of the brake line K1 which is the physical quantity correlating to the brake hydraulic pressure of the master cylinder M1 is not less than the wheel pressure of the brake line K1 which is the physical quantity correlating to the brake hydraulic pressure applied to the wheel brake B1 by the rear interlocking brake control. In short, the shift determining unit 21c according to this embodiment determines it on the basis of the master pressure and the wheel pressure of the brake line K1 which is target of the rear interlocking brake control whether or not the suction valve 4 of the brake line K1 has to be closed.

The interlock history determining unit 21d has functions of;
determining whether or not the execution history of the interlocking brake control is exist; and
outputting the determination result to the interlocking brake control unit 22.
Here, for example, the interlock history determining unit 21 d determines that the execution history of the interlocking brake control is not exist, when the later-described interlock history flag is at "0", and that the execution history of the interlocking brake control is exist, when the interlock history flag is at "1".

The pressure determining unit 21 e includes:
a function to determine whether or not the master pressure is rising;
a function to determine whether or not the wheel pressure is higher than the target wheel pressure; and
a function to output the determination results to the interlocking brake control unit 22.
In this embodiment, it is determined that the master pressure has risen, when the value of the master pressure in the brake line K1 is higher than the previous value (that is, when the operation force of the brake operation element L1 is intensified).

The interlocking brake control unit 22 includes a target wheel pressure setting unit 22a, an interlock control unit 22b and an intervention control unit 22c.

The target wheel pressure setting unit 22a has functions of: setting a target wheel pressure in the brake line K1 of the one wheel (the front wheel) on the basis of the master pressure (the wheel pressure) of the brake line K2 of the other wheel (the rear wheel); and executing a control to open/close the cut valve 1 so that the wheel pressure may be the target wheel pressure (the PWM control of the electromagnetic coil for driving the cut valve 1).
The target wheel pressure is so set on the basis of the magnitude or the rising rate of the master pressure (the wheel pressure) of the brake line K2 of the rear wheel. Here, the operations of the target wheel pressure by the target wheel pressure setting unit 22a are continuously executed even after a pump halt condition or a shift condition establishes.

The interlock control unit 22b includes a function to execute the interlocking brake control defined in advance, when it is determined by the interlock determining unit 21a that the interlocking condition (the rear interlocking condition or the front interlocking condition) establishes. The interlocking brake control by the interlock control unit 22b includes (as referred to Fig. 3) the control to close the cut valve 1, the control to open the suction valve 4, and the control to activate the pump 6 (the motor 7 in this embodiment). Moreover, the interlock control unit 22b executes, when it is determined by the interlock determining unit 21 a that the ending condition establishes, the control to open the cut valve 1 which is target of the interlocking brake control, the control to close the suction valve 4 and the control to stop the pump 6, thereby to end the interlocking brake control. Here, the interlock control unit 22b sets, when the interlocking brake control is executed, the interlock history flag indicating the existence of the execution history of the interlocking brake control, to "1", and stores the same in the not-shown storage unit.

When the rear interlocking brake control is executed, for example, the brake fluid, as reserved on the side of the master cylinder M1 (i.e., the brake fluid reserved in the master cylinder M1, the output hydraulic pressure passage A and the suction passage C), is fed by the pump 6 of the brake line K1 to the wheel hydraulic pressure passage B, so that the brake hydraulic pressure to act on the wheel brake B1 is raised. Here, the valve opening pressure of the cut valve 1 (i.e., the relief pressure of the regulator R) is set to the target wheel pressure by the target wheel pressure setting unit 22a.
When the brake hydraulic pressure of the wheel hydraulic pressure passage B exceeds the target wheel pressure, therefore, the brake fluid of the wheel hydraulic pressure passage B is reduced through the regulator R to the output hydraulic pressure passage A so that the brake hydraulic pressure of the wheel hydraulic pressure passage B is established at the target wheel pressure.
When the rear interlocking brake control is ended, the brake fluid of the wheel hydraulic pressure passage B returns through the cut valve 1 and the output hydraulic pressure passage A to the master cylinder M1 so that the brake hydraulic pressure to act on the wheel brake B1 is quickly reduced.

The intervention control unit 22c, as shown in Fig. 2, includes:
a function to execute the control to stop the pump 6 (the motor 7) activated by the interlocking brake control, when the halt determining unit 21b determines that the pump halt condition establishes;
a function to close the suction valve 4 opened by the interlocking brake control, when the shift determining unit 21 c determines that the shift condition establishes; and
a function to execute the control to open the cut valve 1 closed by the interlocking brake control, when the shift determining unit 21 c determines that the shift condition establishes.

Here, the intervention control unit 22c executes the control to stop the pump 6 when the pump halt condition establishes, but the intervention control unit executes the control to keep the state (i.e. the closed state) on the cut valve 1 closed at the instant when the interlocking condition establishes, similarly, the intervention control unit 22c executes the control to keep the state (the open state) on the suction valve 4 opened when the interlocking condition establishes. Therefore, after the pump halt condition establishes, the feed of the brake fluid to the wheel brake side B1 is stopped, and the brake hydraulic pressure applied to the wheel brake B 1 by the rear interlocking brake control is established.
Moreover, the intervention control unit 22c executes the control to open the cut valve 1 and the control to close the suction valve 4 when the shift condition establishes. However, the intervention control unit 22c executes the control to keep the state (i.e., the halt state) as it is, on the pump 6 stopped when the pump halt condition established. Therefore, after the shift condition established, like the ordinary set state (the state of Fig. 1), in which the anti-lock brake control or the interlocking brake control is not executed, the brake hydraulic pressure according to the stroke of the brake operation element L1 is applied as it is to the wheel brake B1.

With reference to Figs. 1 to 6, the operations of the brake hydraulic pressure control apparatus for the bar-handle vehicle thus constituted are described in detail. Here, the following description is made on the case of the rear interlocking brake control. When the front interlocking brake control is to be made, the various controls on the brake line K1 may be executed on the brake line K2.

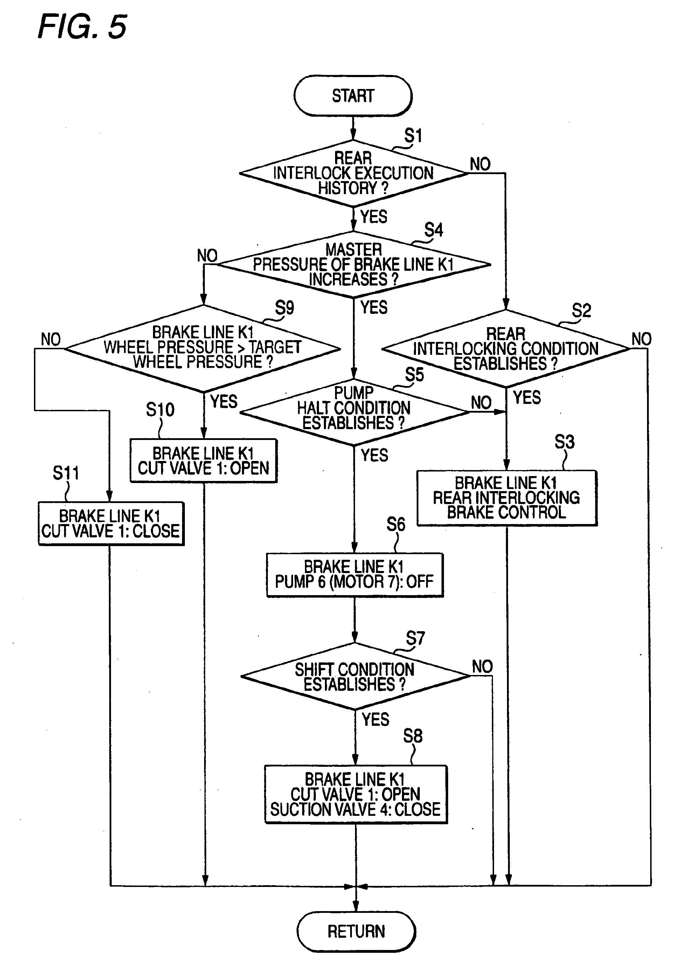

In the bar-handle vehicle brake hydraulic pressure control apparatus according to this embodiment, as shown in a control flow of Fig. 5, it is determined at first (at Step S1) by the interlock history determining unit 21 d whether or not the execution history of the rear interlocking brake control is exist. In the initial state, the interlock history flag is at "0". It is, therefore, determined that the execution history of the rear interlocking brake control is not exist "No", and the routine advances to Step S2.

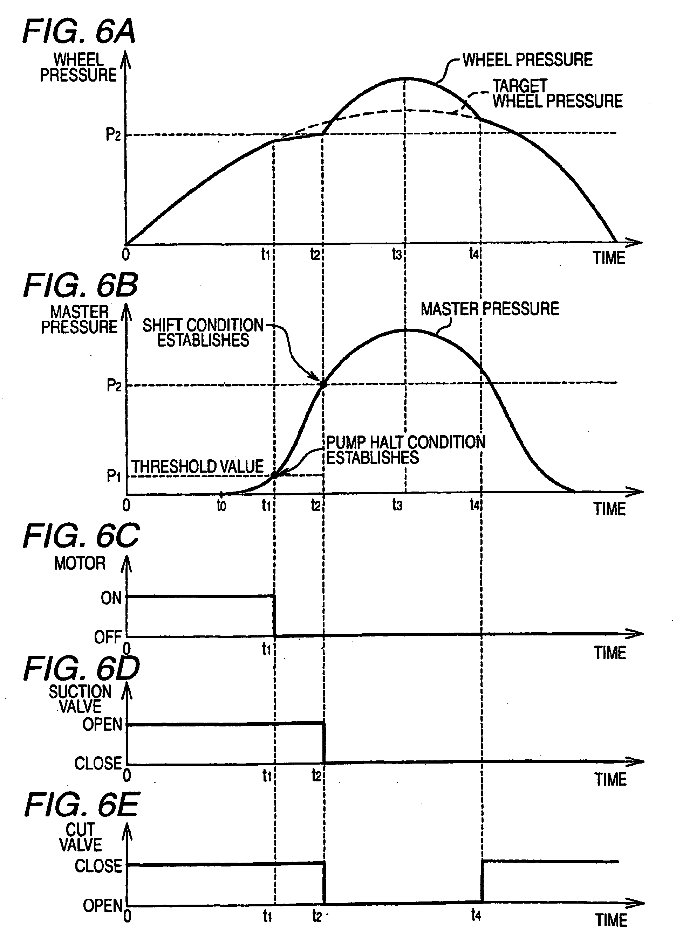

At Step S2, it is determined by the interlock determining unit 21a whether or not the rear locking condition establishes. When it is determined "Yes" that the rear locking condition establishes, the routine advances to Step S3, at which the target wheel pressure is set by the target wheel pressure setting unit 22a, and at which the rear interlocking brake controls (as referred to Fig. 3 and the instants 0 to t₁ of Figs. 6C to 6E) including the control to close the cut valve 1 of the brake line K1, the control to open the suction valve 4 and the control to drive the pump 6 (directly, the motor 7) are executed by the interlock control unit 22c. When the rear interlocking brake control is executed, the brake hydraulic pressure to act on the wheel brake B 1 rises (as referred to the instant 0 to t₁ of Fig. 6A). When the rear interlocking brake control is executed, the interlock history flag is set to "1" by the interlock control unit 22b, and the routine advances to "RETURN".

When it is determined at Step S2 that the rear interlocking condition does not hold "No" (e.g., when the operations of the brake operation element L1 of the front wheel and the brake operation element L2 of the rear wheel are simultaneously started, and when the master pressure of the brake line K1 is higher than the halt reference value), the routine advances to "RETURN" without performing any interlocking brake control.

When Step S3 is executed, although the routine returns again to Step S1, since the interlock history flag is at "1", it is determined "Yes" that the rear interlock execution history is, and the routine advances to Step S4.

At Step S4, the pressure determining unit 21e determines whether or not the master pressure of the brake line K1 has increased. When it is determined "Yes" that the master pressure of the brake line K1 has increased, the routine advances to Step S5. When the brake operation element L1 is operated (as referred to Fig. 6B) after the rear interlocking brake control was started, the routine advances to Step S5 while the master pressure of the brake line K1 is increasing (for the period from the instants t0 to t3 in Fig. 6B).

At Step S5, it is determined by the halt determining unit 21b whether or not the pump halt condition has established. In this embodiment, it is determined "Yes" (as referred to the instant t₁ of Fig. 6B) that the pump halt condition has established, when the master pressure of the brake line K1 which is target of the rear interlocking brake control is not less than the threshold value P1. Specifically, it is determined "Yes" that the pump halt condition has established, when the operation of the brake operation element L1 is started after the rear interlocking brake control was started and when the master pressure is increased to the threshold value P1 or higher by the operation of that brake operation element L1.

Here, when the master pressure is lower than the threshold value P1 (although including the case, in which the brake operation element L1 is not operated), it is determined "No" that the pump halt condition does not establish. When it is determined "No" that the pump halt condition does not establish, the routine advances to Step S3, at which the interlocking brake control is continuously executed.

When it is determined "Yes" that the pump halt condition establishes, the routine advances to Step S6, at which the control to stop the pump 6 (the motor 7 in this embodiment) activated by the rear interlocking brake control is executed (as referred to the instant t₁ and after of Fig. 6C). Here, the controls at or before Step S5 are executed on the cut valve 1 and the suction valve 4, and the operations of the target wheel pressure by the target wheel pressure setting unit 22a are also continuously executed.

When the control to stop the pump 6 is executed, the feed of the brake fluid to the wheel brake side B 1 is stopped. However, the control to close the cut valve 1 is continuously executed (as referred to the instants t₁ to t₂ of Fig. 6D), the brake hydraulic pressure applied to the wheel brake B 1 is held (as referred to the instants t₁ to t₂ of Fig. 6A). Here, the one-way valve is confined in the pump 6, as described hereinbefore, the brake fluid on the exit side does not flow back to the suction side even if the suction valve 4 is left open.

When the operation of Step S6 is executed, the routine advances to Step S7, at which it is determined by the shift determining unit 21c whether or not the shift condition has established. In this embodiment, it is determined "Yes" that the shift condition has established, when the master pressure of the brake line K1 which is target of the rear interlocking brake control becomes the wheel pressure P₂ of the brake line K1 or higher, but it is determined "No" that the shift condition does not establish, when the master pressure is lower than the wheel pressure P₂.

When it is determined "Yes" that the shift condition has established, the routine advances to Step S8, at which the control to open the cut valve 1 closed by the rear interlocking brake control and to close the suction valve 4 opened by the rear interlocking brake control are executed (as referred to the instant t₂ and after of Figs. 6D and 6E) by the intervention control unit 22c while the motor 7 (the pump) being stopped.

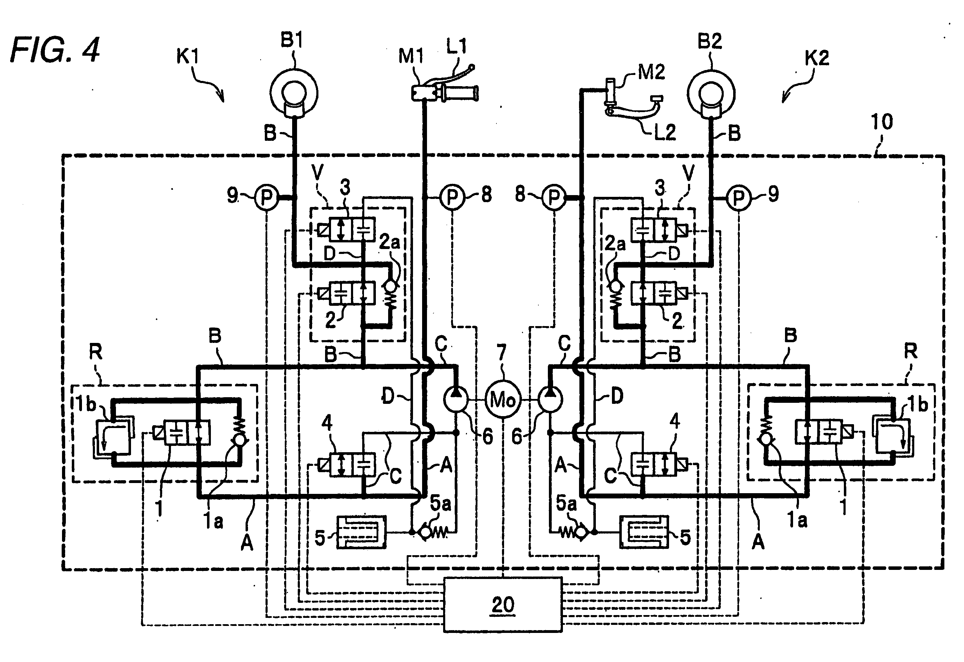

When the cut valve 1 is opened at Step S8, the brake hydraulic pressure according to the stroke extent of the brake operation element L1 is applied to the wheel brake B1, as shown by the instants t₂ to t₄ of Figs. 4A and 6A.

Here in this embodiment, the regulator R is equipped with the check valve 1a for allowing the inflow of the brake fluid from the upstream side (i.e., the master cylinder side M1) to the downstream side (i.e., the wheel brake side B1). Even if the control to open the cut valve 1 is not executed when the shift condition establishes, the check valve 1a is opened to feed the brake hydraulic pressure according to the stroke extent of the brake operation element L1 to the wheel brake B1, at the instant when the brake hydraulic pressure of the master cylinder M1 in the brake line K1 which is target of the rear interlocking brake control is higher by the opening pressure of the check valve 1a than the brake hydraulic pressure fed by the rear interlocking brake control to the wheel brake B1. If the cut valve 1 is opened (as referred to the instants t₂ to t₄ of Fig. 6E) at the instant when the shift condition establishes, as in this embodiment, the brake fluid can be fed more smoothly to the downstream side (as referred to the instants t₂ to t₄ of Fig. 6A). Even if the control to close the suction valve 4 is not executed when the shift condition establishes, on the other hand, it is not unlike that the brake hydraulic pressure according to the stroke extent of the brake operation element L1 is applied to the wheel brake B1, when the brake hydraulic pressure of the master cylinder M1 becomes higher than the brake hydraulic pressure of the rear wheel brake B1. If the control to close the suction valve 4 is executed as in this embodiment (as referred to the instant t₂ and after of Fig. 6D), the brake fluid flows to the downstream side through only the regulator R. As compared with the case, in which the suction valve 4 is not closed (that is, when the brake fluid is allowed to flow to the downstream side via the suction passage C (the pump 6), therefore, the degree of reducing the operation reaction of the brake operation element L1 can be reduced to keep the operation feeling satisfactory.

Here, when it is determined "No" at Step S7 that the shift condition does not establish, the routine advances to "RETURN".

When the operating force of the brake operation element L1 having started its operation after the rear interlocking brake control was started is held or weakened (as referred to the instants t₃ to t₄ of Fig. 6B), it is determined "No", as described hereinbefore, at Step S4 that the master pressure of the brake line K1 has not increased, and the routine advances to Step S9. When the routine advances to Step S9, the pressure determining unit 21e determines whether or not the wheel pressure has reached the target wheel pressure.

When it is determined "Yes" at Step S9 that the wheel pressure of the brake line K1 is not less than the target wheel pressure (as referred to the instants t₃ to t₄ of Fig. 6A), the routine advances to Step S10, at which the control to open the cut valve 1 of the brake line K1 is executed by the intervention control unit 22c. When the cut valve 1 is opened, the brake hydraulic pressure to act on the wheel brake B1 is decreased as the stroke extent of the brake operation element L1 decreases.

When it is determined "No" at Step S9 that the wheel pressure is lower than or equal to the target wheel pressure (as referred to the instant t₄ or after of Fig. 6A), the routine advances to Step S11, at which the control to close the cut valve 1 of the brake line K1 is executed by the intervention control unit 22c. Even if the control to close the cut valve 1 is executed, the valve opening pressure of the cut valve 1 is set to the target wheel pressure by the target wheel pressure setting unit 22a, so that the wheel pressure is reduced to follow the target wheel pressure. At Step S11, the controls at and before Step S11 are continuously executed on the suction valve 4 and the pump 6. When, therefore: the rear interlocking brake control is continued (to set the continuation flag at "1"), when the routine advances to Step S11 before the pump halt condition establishes; the control to open the suction valve 4 and the control to stop the pump 6 is continued, when the routine advances to Step S11 after the pump halt condition established and before the shift condition establishes; and the control to close the suction valve 4 and the control to stop the pump 6 are continued, when the routine advances to Step S11 after the shift condition established.

When the operation of the brake operation element L2 of the rear wheel is continuously performed, the control to close the suction valve 4 and the control to drive the pump 6 may be executed to reopen the rear interlocking brake control, at the instant when the master pressure of the brake line K1 becomes lower than the threshold value P₁.

When the wheels may fall into the locked states while the aforementioned control flow is being executed, the control shifts to the aforementioned anti-lock brake control.

According to the brake hydraulic pressure control apparatus for the bar-handle vehicle according to the first embodiment as described above, the pump 6 is stopped when the master pressure of the master cylinder M1 (the master cylinder M2) corresponding to the brake line K1 (the brake line K2) or the target of the interlocking brake control becomes the threshold value or higher. After the master pressure reached the threshold value, the pulsations, as might otherwise be caused by the motions of the pump, are not generated. According to the brake hydraulic pressure control apparatus for the bar-handle vehicle of the present embodiment, the operation feeling of the brake operation element L1 (L2) is not deteriorated, even if the driver operates the brake operation element L1 (L2) or the target of the interlocking brake control while the interlocking brake control is being executed.

According to the brake hydraulic pressure control apparatus for the bar-handle vehicle of the present embodiment, moreover, the braking force can be enhanced by the interlocking brake control until the master pressure reaches the threshold value. As a result, the interlocking brake control can be controlled if the driver just touches the brake operation element L1 (L2) corresponding to the brake line K1 (K2) or the target of the interlocking brake control.

According to the brake hydraulic pressure control apparatus for the bar-handle vehicle of the present embodiment, when the brake hydraulic pressure of the master cylinder M1 (M2) in the brake line K1 (K2) which is target of the interlocking brake control is made higher than the brake hydraulic pressure applied to the wheel brake B1 (B2) by the interlocking brake control, the brake hydraulic pressure corresponding to the stroke extent of the brake operation element L1 (L2) corresponding to the brake line K1 (K2) is applied to the wheel brake B1 (B2). As a result, it is possible to give the driver a feeling to operate the wheel brake B1 (B2) directly.

Here, the aforementioned constitution of the brake hydraulic pressure control apparatus for the bar-handle vehicle may also be suitably modified.
In the aforementioned embodiment, for example, when the pump halt condition establishes, the control to stop the pump 6 (the motor 7) is made, but the suction valve 4 is kept open. It is arbitrary to execute not only the control to stop the pump 6 but also to close the suction valve 4.

In the aforementioned embodiment, moreover, the shift condition is made such that the master pressure of the brake line K1 is equal to or higher than the wheel pressure of the brake line K1. However, the shift condition should not be limited thereto, but may be exemplified by that, in which the master pressure of the brake line K1 is not less than a shift reference value larger than the threshold value. Here, the constant stored in advance in the not-shown storage unit may be used as the shift reference value, but the target wheel pressure set by the target wheel pressure setting unit 22a may be the shift reference value.

In the aforementioned embodiment, moreover, there is exemplified a case, in which the intervention control is performed according to the control flow shown in Fig. 6, but may be suitably modified. The control flow may also be modified such that the control mode is selected on the basis of the aforementioned various conditions (e.g.; the interlocking condition, the pump halt condition or the shift condition) so that the intervention control is executed to correspond to the control mode selected,

In this case, the condition that "the master pressure of the brake line K1 is not less than the target wheel pressure set by the target wheel pressure setting unit 22a" is made as the shift condition. At the same time, the determining unit 21 may be constituted, although not shown: such that among the interlocking condition, the pump halt condition and the shift condition,
(1) the interlocking mode is selected when only the interlocking condition is established;
(2) the pump halt mode is selected when only the interlocking condition and the pump halt condition establish; and
(3) the shifting mode is selected when the interlocking condition, the pump halt condition and the shift condition establish.
   At the same time, the interlocking brake control unit 22 may also be constituted: such that

(1) when the interlocking mode is selected by the determining unit 21, "the interlocking brake control including the control to close the cut valve 1, the control to open the suction valve 4 and the control to activate the pump 6 (the motor 7)" is executed;
when the pump halt mode is selected, "the control to close the cut valve 1, the control to close the suction valve 4 and the control to stop the pump 6 (the motor 7)" are executed; and
when the shifting mode is selected , "the control to open the cut valve 1, the control to close the suction valve 4 and the control to stop the pump 6 (the motor 7)" are executed.

In the aforementioned embodiment, moreover, there has been exemplified the brake hydraulic pressure control apparatus for the bar-handle vehicle, which can perform the interlocking brake control on both the brake lines K1 and K2. However, the invention should not be limited thereto. The brake hydraulic pressure control apparatus for the bar-handle vehicle may also be one for performing the interlocking brake control on only the brake line K1 or K2, although not shown.

### (Second Embodiment)

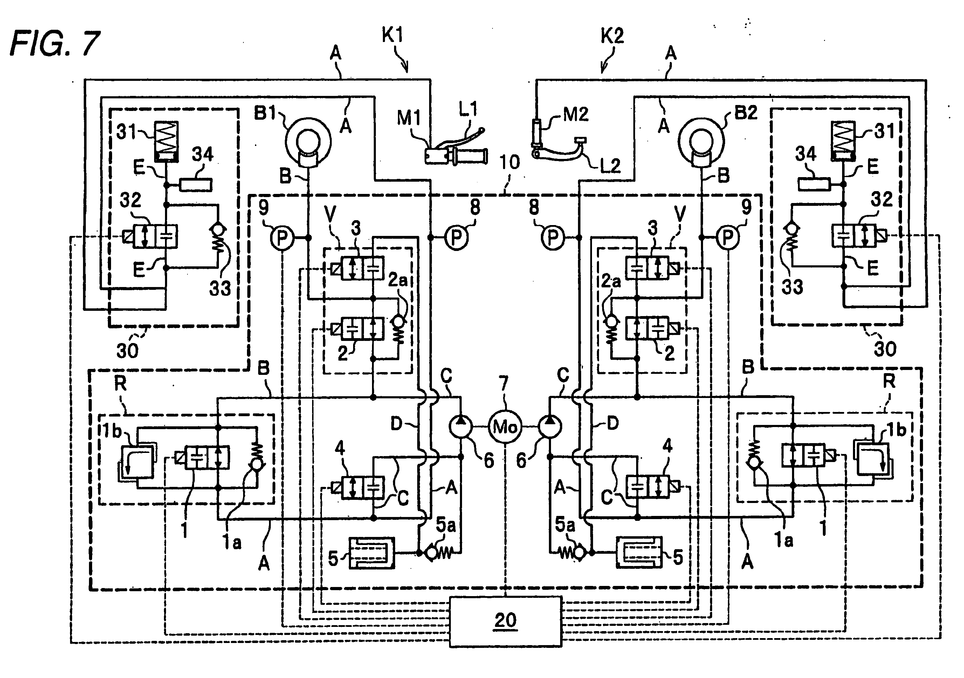

The brake hydraulic pressure control apparatus for the bar-handle vehicle according to a second embodiment includes the brake line K1 for braking the front wheel and the brake line K2 for braking the rear wheel, as shown in Fig. 7, but is different from that of the first embodiment in that each of the brake lines K1 and K2 is equipped with a simulator unit 30. Here, the individual brake lines K1 and K2 are identical in constitution. In the following, therefore, the brake line K1 of the front wheel is mainly described, and the brake line K2 of the rear wheel is suitably described. Moreover, the constitution of a hydraulic unit 10 is similar to that of the aforementioned brake hydraulic pressure control apparatus for the bar-handle vehicle according to the first embodiment, and its detailed description is omitted.

The simulator unit 30 includes a branch passage E, a stroke simulator 31, a change-over valve 32, a one-way valve 33 and a breeder 34. Here, the branch passage E is a hydraulic pressure passage (a fluid passage) leading from an output hydraulic pressure passage A to the stroke simulator 31.

The stroke simulator 31 applies the operation reaction of the brake operation element L1 artificially to the brake operation element L1. Although not especially limited, the stroke simulator 31 of this embodiment includes a cylinder having an inlet and an outlet ports for the brake fluid, a piston for sliding in the cylinder thereby to form a space for reserving the brake fluid temporarily, and a biasing member for biasing the piston to the side of the inlet and outlet ports. Here, it is desired that the stroke simulator 31 can reproduce the operation feeling of the case, in which a brake hydraulic pressure like the maximum of the brake hydraulic pressure to be applied to the wheel brake B1 by the interlocking brake control is applied to the wheel brake B1 by the operation of the brake operation element L1. Specifically, it is desired that the maximum of the operation reaction to be reproduced by the stroke simulator 31 is made equivalent to the operation reaction which is generated when the brake hydraulic pressure similar to the maximum of the brake hydraulic pressure to be applied to the wheel brake B1 by the interlocking brake control is applied to the wheel brake B1 by the operation of the brake operation element L1.

The change-over valve 32 opens/closes the branch passage E, and is made of a normally closed electromagnetic valve so that it allows the passage of the brake fluid, when in the open state, but isolates when in the closed state. The normally closed type electromagnetic valve constituting the change-over valve 32 has its electromagnetic coil electrically connected with the control unit 20, so that it is opened, when its electromagnetic coil is magnetized on the basis of a command from the control unit 20, but is closed when the electromagnetic coil is demagnetized.

The one-way valve 33 allows only the inflow of the brake fluid from the stroke simulator side 31 to the master cylinder side M1 (the side of the output hydraulic pressure passage A), and is disposed in parallel with the change-over valve 32. Specifically, the one-way valve 33 is disposed in the passage bypassing the change-over valve 32, and is opened when the difference of the brake hydraulic pressure in the stroke simulator 31 from the brake hydraulic pressure in the output hydraulic pressure passage A exceeds the valve opening pressure.

A breeder 34 is for releasing air contained in the fluid passage at the time of sealing the brake fluid and is provided between the stroke simulator 31 and the change-over-valve 32 to communicate with the branch passage.

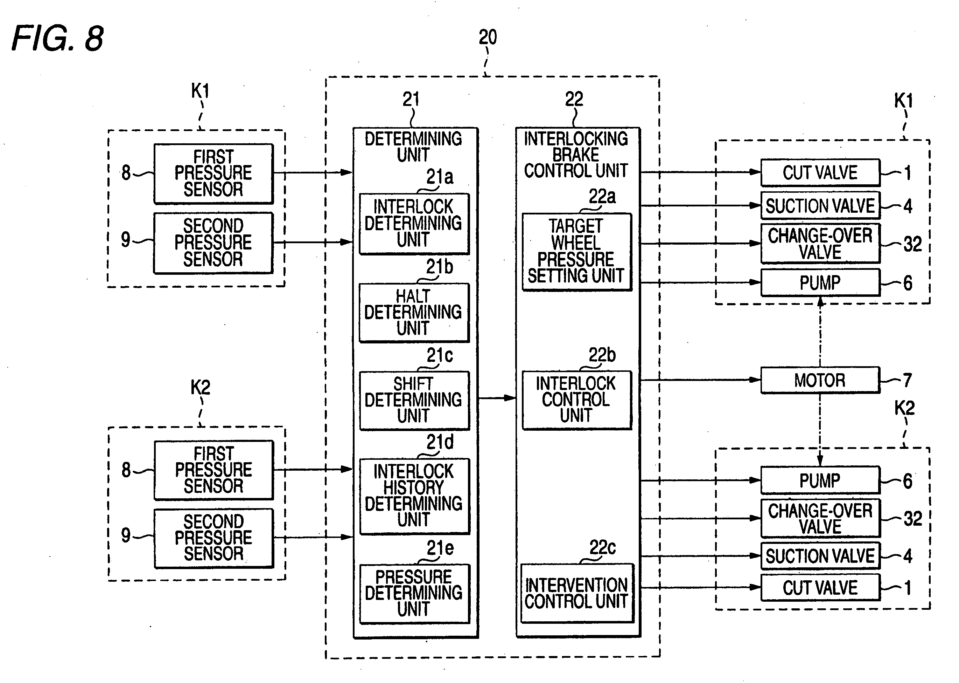

The interlocking brake control in the second embodiment is described in the following.
As shown in Fig. 8, the interlocking brake control in the second embodiment is also executed by introducing physical quantities such as the master pressure acquired by the first pressure sensor 8 and the wheel pressure acquired by the a second pressure sensor 9, into the control unit 20 functioning the determining unit 21 and the interlocking brake control unit 22.

The determining unit 21 includes the interlock determining unit 21 a, the halt determining unit 21b, the shift determining unit 21c, the interlock history determining unit 21d, and the pressure determining unit 21e, These determining units are similar to those of the aforementioned determining unit 21 of the first embodiment, and their detailed description is omitted.

The interlocking brake control unit 22 includes the target wheel pressure setting unit 22a, the interlock control unit 22b and the intervention control unit 22c. Here, the function of the target wheel pressure setting unit 22a is similar to that of the aforementioned interlocking brake control unit 22 of the first embodiment, and their detailed description is omitted.

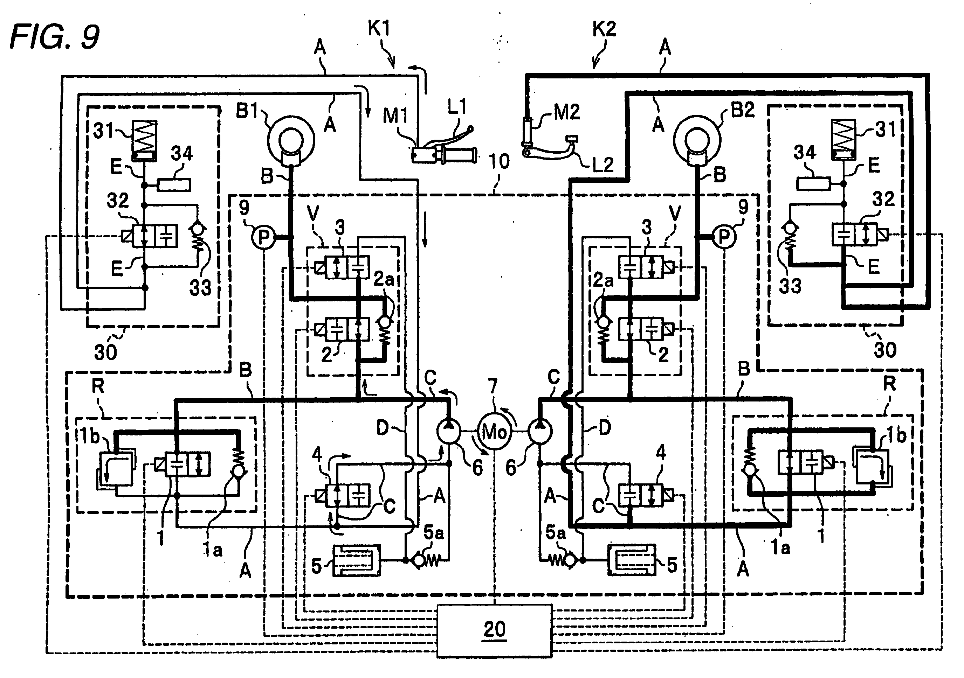

The interlock control unit 22b includes the aforementioned function described in the first embodiment and also the control to open/close the change-over valve 32 of the brake line K1 (K2) or the target of the interlocking brake control. When it is determined the interlocking condition established, more specifically, the interlock control unit 22b starts the interlocking brake control including the control to close the cut valve 1, the control to open the suction valve 4, and the control to drive the pump 6 (the motor 7 in this embodiment) on the brake line K1 (K2) or the target of the interlocking brake control, and starts the control to open the change-over valve 32 thereby to communicate the output hydraulic pressure passage A with the stroke simulator 31 (that is, the control to open the branch passage E) (as referred to the brake line K1 of Fig. 9). When it is determined by the interlock determining unit 21a that the ending condition established, moreover, the interlock control unit 22b executes the control to open the cut valve 1, the control to close the suction valve 4, and the control to stop the pump 6, on the brake line K1 (K2) or the target of the interlocking brake control, thereby to end the interlocking brake control, and to close the change-over valve 32 thereby to execute the control to isolate the stroke simulator 31 from the output hydraulic pressure passage A (i.e., the control to isolate the branch passage E).

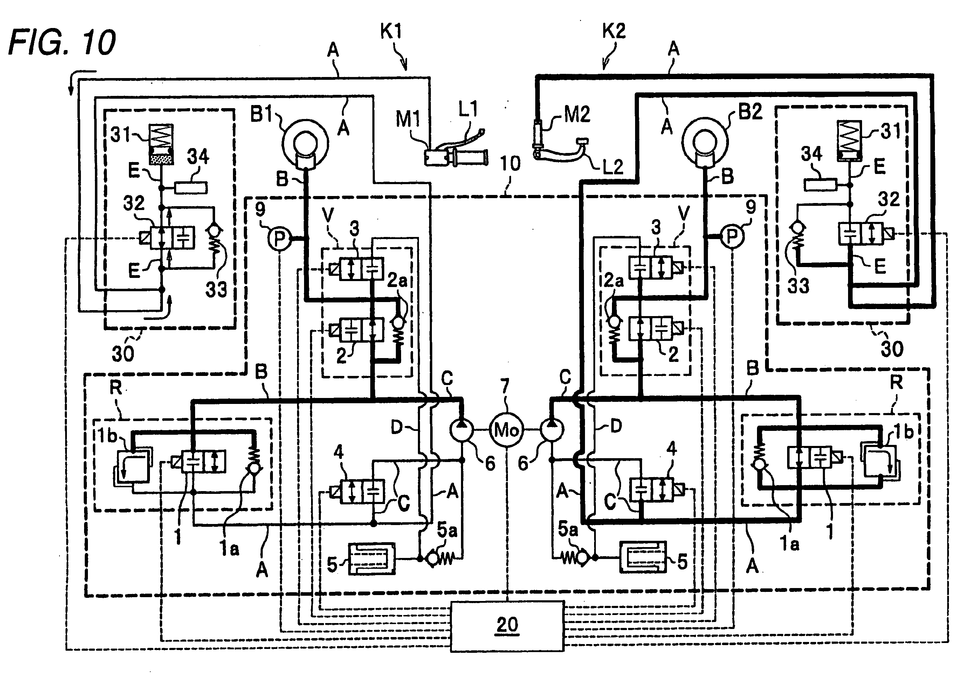

When the rear interlocking condition establishes, for example, the rear interlocking brake control is executed on the brake line K1, as shown in Fig. 9, so that the brake hydraulic pressure to act on the wheel brake B1 is raised by the pump 6. However, the control to open the change-over valve 32 of the brake line K1 is executed so that the brake fluid can be introduced into the stroke simulator 31. When the brake operation element L1 corresponding to the brake line K1 is operated, therefore, the brake fluid flows into the stroke simulator 31 (as referred to Fig. 10).

The intervention control unit 22c, as shown in Fig. 8, includes the aforementioned functions described in the first embodiment and also a function to execute the control (i.e., the control to isolate the branch passage E) to close the change-over valve 32 opened at the holding time of the interlocking condition, when the shift determining unit 21c determines that the shift condition established, thereby to isolate the stroke simulator 31 from the output hydraulic pressure passage A. When the shift condition establishes, more specifically, the intervention control unit 22c executes the control to open the cut valve 1, the control to close the suction valve 4 and the control to close the change-over valve 32, on the brake line K1 (k2) or the target of the interlocking brake control, and executes the control to keep the halt state on the pump 6 (the motor 7).

Here, the intervention control unit 22c executes the control to stop the pump 6, when the pump halt condition establishes, as shown in Fig. 10. However, the intervention control unit 22c executes the control to keep the state (i.e. the closed state) on the cut valve 1 closed at the instant when the interlocking condition establishes, and the control to keep the state (the open state), on the suction valve 4 and the change-over valve 32 opened when the interlocking condition establishes. Therefore, after the pump halt condition established, the state for the brake fluid to flow into the stroke simulator 31 is kept, and the brake hydraulic pressure applied to the wheel brake B1 by the interlocking brake control is held. Moreover, when the shift condition establishes, the intervention control unit 22c executes the control to open the cut valve I, the control to close the suction valve 4 and the control to close the change-over valve 32, on the brake line K1 (K2) which is the target of the interlocking brake control. However, the intervention control unit 22d executes the control to keep the state (i.e., the halt state), on the pump 6 stopped when the pump halt condition established. Therefore, after the shift condition established, like the ordinary set state (the state of Fig. 7), in which the anti-lock brake control or the interlocking brake control is not executed, the brake hydraulic pressure according to the stroke of the brake operation element L1 is applied to the wheel brake B1.

Here in the state (the ordinary set state) where neither the anti-lock brake control nor the interlocking brake control is executed, the electromagnetic coil for driving the change-over valve 32 is demagnetized so that the change-over valve 32 is closed. If the driver operates the brake operation elements L1 and L2 when the control unit 20 selects the ordinary set state, the brake hydraulic pressure, as generated in the master cylinders M1 and M2, is applied, to the wheel brakes B1 and B2 via the output hydraulic pressure passage A and the wheel hydraulic pressure passage B.

With reference to Figs. 7 to 11, the operations of the brake hydraulic pressure control apparatus for the bar-handle vehicle thus constituted are described in detail. Here, the following description is made on the case, in which the rear interlocking brake control made., however, if executing the front interlocking brake control, it can be performed by executing the following various controls on the brake line K2.

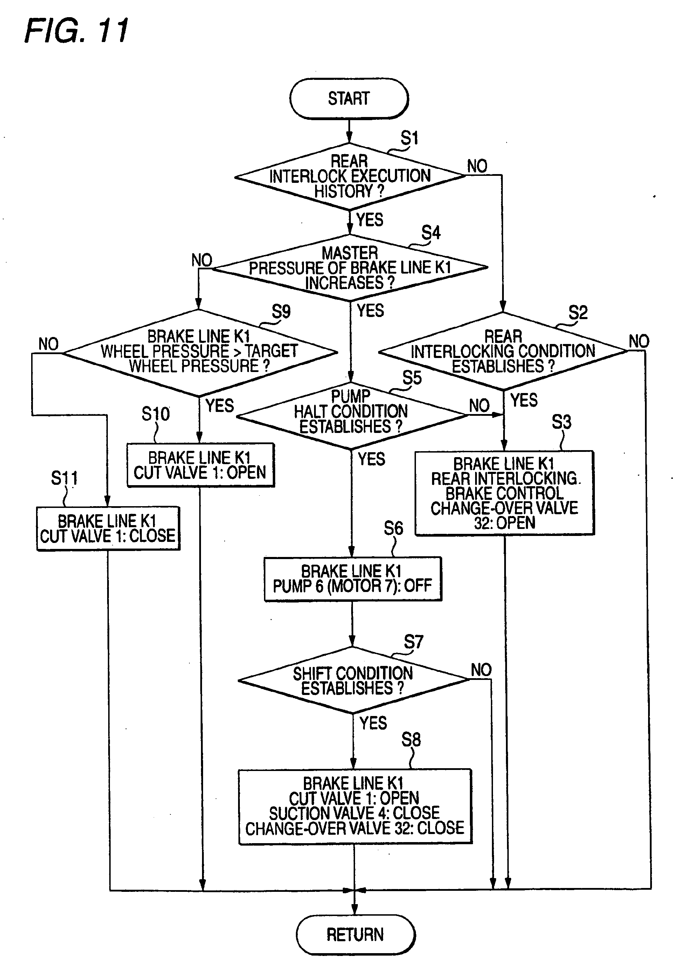

Here, the operations of the brake hydraulic pressure control apparatus for the bar-handle vehicle according to this embodiment is different, as shown in the control flow of Fig. 11, in that the control to open the change-over valve 32 of the brake line K1 which is target of the rear interlocking brake control is executed at Step S3, and in that the control to close the change-over valve 32 of the brake line K1 is executed at Step S8. The remaining points are similar to those of the control flow (as referred to Fig. 5), which have been described in the foregoing first embodiment, and their detailed description is omitted.

In this embodiment, when it is determined "Yes" at Step S2 that the rear interlocking condition establishes, the routine advances to Step S3, at which the target wheel pressure is set by the target wheel pressure setting unit 22a and at which the interlock control unit 22b executes the control to close the cut valve 1 of the brake line K1, the control to open the suction valve 4 and the control to drive the pump 6 (directly the motor 7). At the same time, the interlock control unit 22b executes the control to open the change-over valve 32 of the brake line K1 (i.e., the control to communicate he output hydraulic pressure passage A with the stroke simulator 31). If the operation of the brake operation element L1 corresponding to the brake line K1 is performed after that, therefore, the brake fluid corresponding to the stroke extent of the brake operation element L1 flows into the stroke simulator 31, so that the artificial operation reaction is applied to the brake operation element L1.

When it is determined "Yes" at Step S5, while the rear interlocking brake control is being executed, that the pump halt condition is established, the routine advances to Step S6, at which the control to stop the pump 6 (the motor 7 in this embodiment) which is target of the rear interlocking brake control is executed. However, on the cut valve 1, the suction valve 4 and the change-over valve 32, the controls before the pump halt condition establishes (i.e., the cut valve 1: close, the suction valve 4: open, and the change-over valve 32: open) are continuously executed. As a result, the brake hydraulic pressure, as applied to the wheel brake B1, is held, and the operation reaction according to the stroke extent is applied to the brake operation element L1.

When it is determined "Yes" at Step S7 that the shift condition establishes, the routine advances to Step S8, at which the control to open the cut valve 1, the control to close the suction valve 4 and the control to close the change-over valve 32 (the control to isolate the stroke simulator 31 from the output hydraulic pressure passage A) are executed, while the pump 6 is being stopped, on the brake line K1 which is target of the rear interlocking brake control by the intervention control unit 22c.

When the change-over valve 32 is closed at Step S8, the stroke simulator 31 is isolated from the output hydraulic pressure passage A. As a result, the inflow of the brake fluid to the stroke simulator 31 is blocked so that the artificial operation reaction is not applied to the brake operation element L1. At the instant when the brake hydraulic pressure of the master cylinder M1 is made larger to an extent of the opening extent of the check valve 1a than the brake hydraulic pressure applied to the wheel brake B1 by the rear interlocking brake control, the brake hydraulic pressure corresponding to the stroke extent of the brake operation element L1 is applied to the wheel brake B1. Therefore, after this, the operation reaction, which is caused by applying the brake hydraulic pressure to the wheel brake B1, is applied to the brake operation element L1.

Even if the control to close the change-over valve 32 is not executed when the shift condition establishes, the brake hydraulic pressure is likewise applied to the wheel brake B1. If the control to close the change-over valve 32 is executed as in this embodiment, the brake fluid flows only into the wheel cylinder of the wheel brake B1 but not into the stroke simulator 31. As compared with the case, in which the change-over valve 32 is not closed when the shift condition establishes, therefore, it is possible to reduce the decreasing degree of the operation reaction of the brake operation element L1 and to keep the operation feeling satisfactory.

Here, the brake fluid having flown into the stroke simulator 31 returns to the master cylinder M1 through the change-over valve 32, when the operating force of the brake operation element L1 is weakened before the shift condition establishes. When the operating force of the brake operation element L1 is weakened after the shift condition establishes, the brake hydraulic pressure of the output hydraulic pressure passage A returns to the master cylinder M1 through the one-way valve 33, after it becomes lower than the brake hydraulic pressure in the stroke simulator 31.

According to the brake hydraulic pressure control apparatus for the bar-handle vehicle of the second embodiment thus far described, when the brake operation element L1 (L2) corresponding to the brake line K1 (K2) is operated after the interlocking brake control was executed on the brake line K1 (K2), the operation reaction is applied by the stroke simulator 31 to the brake operation element L1 (L2) before the shift condition establishes, and the operation reaction is applied to the brake operation element L1 (L2) by the brake hydraulic pressure applied to the wheel brake B1 (B2) after the shift condition establishes. Therefore, the operation feeling like that at the ordinary braking operation with no interlocking brake control can be given to the driver. Here, the operation reaction of the brake operation element L1 (L2) is not wholly simulated by the stroke simulator 31, so that the stroke simulator 31 can be reduced in size.

In this embodiment, moreover, the one-way valve 33 for allowing only the inflow of the brake fluid from the stroke simulator side 31 to the master cylinder side M1 (M2) is disposed in parallel with the change-over valve 32. Therefore, even when the change-over valve 32 is in the closed state, the brake fluid having flown into the stroke simulator 31 can be returned to the master cylinder M1 (M2).

In this embodiment, moreover, the hydraulic pressure unit 10 and the simulator units 30, 30 are made separate. Therefore, for the hydraulic pressure unit 10, either the hydraulic pressure unit 10 for the brake hydraulic pressure control apparatus for the bar-handle vehicle according to the first embodiment or the hydraulic pressure unit for the brake hydraulic pressure control apparatus for the bar-handle vehicle for the interlocking brake control of the prior art can be employed as it is. Of course, it is arbitrary to integrate the hydraulic pressure unit 10 and the simulator units 30 and 30.

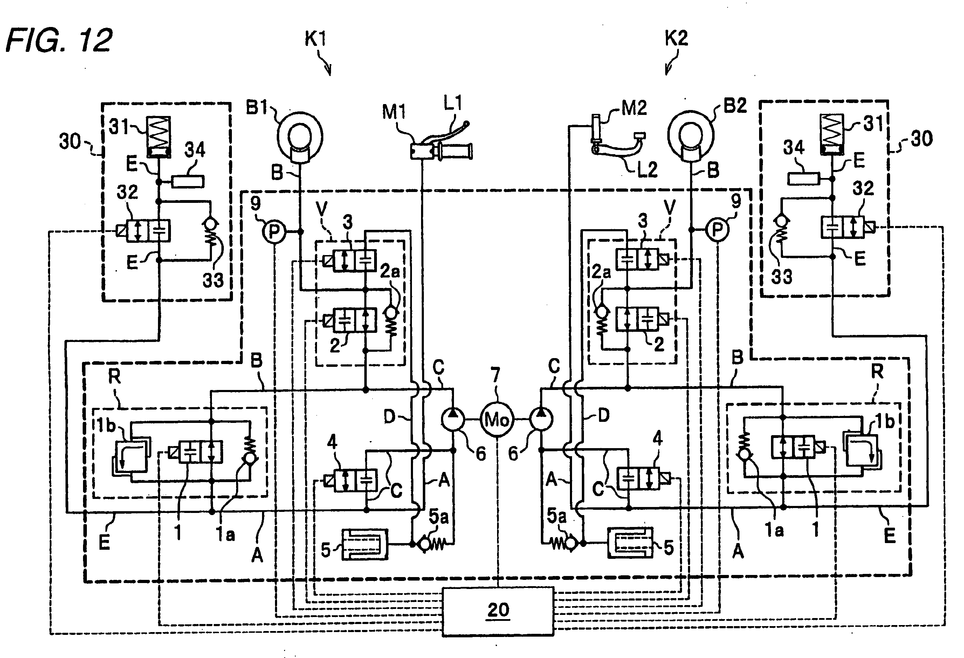

Moreover, this embodiment has exemplified the case, in which the simulator unit 30 is disposed in the passage of the brake fluid leading from the master cylinder M1 (M2) to the hydraulic pressure unit 10 and in which the branch passage E is branched in the simulator unit 30 from the output hydraulic pressure passage A. However, the branch should not be limited thereto, but the branch passage E may also be branched in the hydraulic pressure unit 10 from the output hydraulic pressure passage A, as shown in Fig. 12.

### (Third Embodiment)

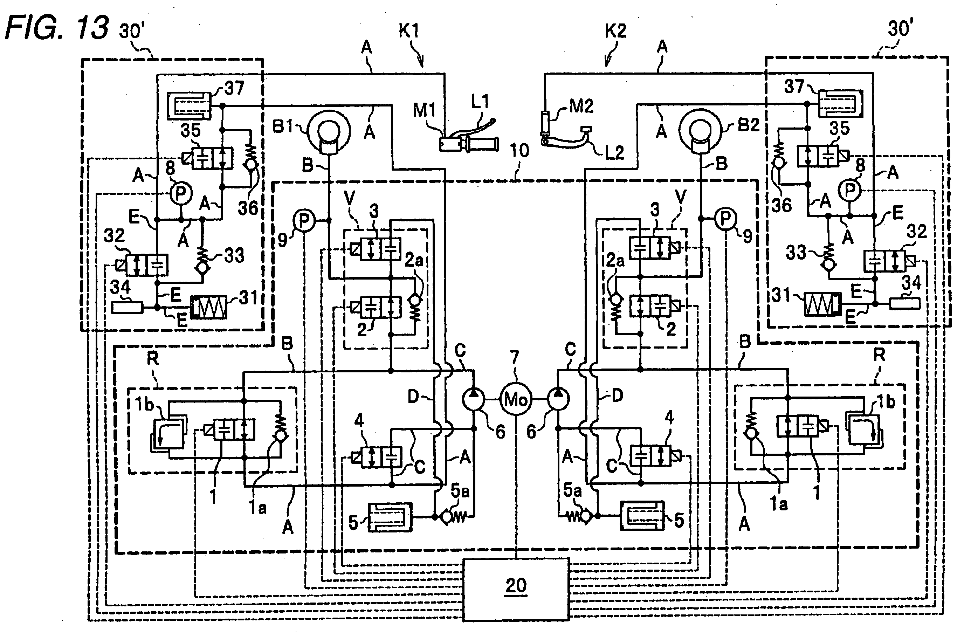

In the brake hydraulic pressure control apparatus for the bar-handle vehicle according to a third embodiment, as shown in Fig. 13, each of the brake lines K1 and K2 includes a simulator unit 30' of a constitution different from that of the simulator unit 30 (as referred to Fig. 7) of the second embodiment. Here, the individual brake lines K1 and K2 are identical in constitution. Therefore, in the following, the brake line K1 of the front wheel is mainly described, and the brake line K2 of the rear wheel is suitably described. Moreover, the constitution of the hydraulic unit 10 is similar, excepting the absence of the first pressure sensor 8, to that of the aforementioned brake hydraulic pressure control apparatus for the bar-handle vehicle according to the first embodiment, and its detailed description is omitted.

The simulator unit 30' includes a branch passage E, a first pressure sensor 8, a stroke simulator 31, a change-over valve 33, a breeder 34, an isolating valve 35, a second one-way valve 36 and a reservoir 37.

Here, the constitutions of the stroke simulator 31, the change-over valve 32 and the one-way valve 33 are respectively similar to those of the second embodiment, and their detailed description is omitted.

The isolating valve 35 opens and closes the output hydraulic pressure passage A on the downstream side (on the regulator side R) of a connection point between the output hydraulic pressure passage A and the branch passage E, and is made of a normally open type electromagnetic valve, which allows the passage of the brake fluid, when opened, but isolates when closed. Here in this embodiment, the isolating valve 35 is arranged in the output hydraulic pressure passage A downstream of the connection point of the passage (i.e., the passage bypassing the change-over valve 32) equipped with the output hydraulic pressure passage A and the first one-way valve 33. The normally open type electromagnetic valve constituting the isolating valve 35 is electrically connected, at an electromagnetic oil for driving its valve member, electrically with the control unit 20, so that it is closed, when the electromagnetic coil is energized on the basis of an instruction from the control unit 20, and is opened when the electromagnetic coil is deenergized.

The second one-way valve 36 allows only the inflow of the brake fluid from the upstream side to the downstream side, and is disposed in parallel with the isolating valve 35. Specifically, the second one-way valve 36 is disposed in a passage bypassing the isolating valve 35, and is opened when the value of the difference of the brake hydraulic pressure on the upstream side of the isolating valve 35 from the brake hydraulic pressure on the downstream side becomes the valve opening pressure or higher. Here, the valve opening pressure of the second one-way valve 36 is set to such a level that the valve is not opened by the pressure fluctuations which are caused in the output hydraulic pressure passage A when the brake fluid is sucked by the pump 6.

The reservoir 37 reserves the brake fluid to be sucked by the pump 6 at the time of interlocking brake control, and is connected to the output hydraulic pressure passage A on the downstream side of the isolating valve 35. The reservoir is not especially limited in its constitution, but is constituted, in this embodiment, to include a cylinder having an inlet and an outlet ports for the brake fluid and opened on its bottom side to the atmosphere, a piston sliding in the cylinder, and a bias member for biasing the piston to the bottom side of the cylinder. This reservoir 37 slides, when the pump 6 is driven, to move against the biasing force of the bias member toward the inlet and outlet sides of the piston, thereby to feed the reserved brake fluid to the output hydraulic pressure passage A, and slides, when the brake fluid is returned through the output hydraulic pressure passage A, to move the piston toward the bottom side of the cylinder with the bias member, thereby to form a space for reserving the brake fluid.

Although the first pressure sensor 8 is disposed in the simulator unit 30', and it acquires the master pressure likewise as described before. The first pressure sensor 8 is so disposed in the output hydraulic pressure passage A on the upstream side of the isolating valve 35 as to acquire the master pressure even when the isolating valve 35 is closed.

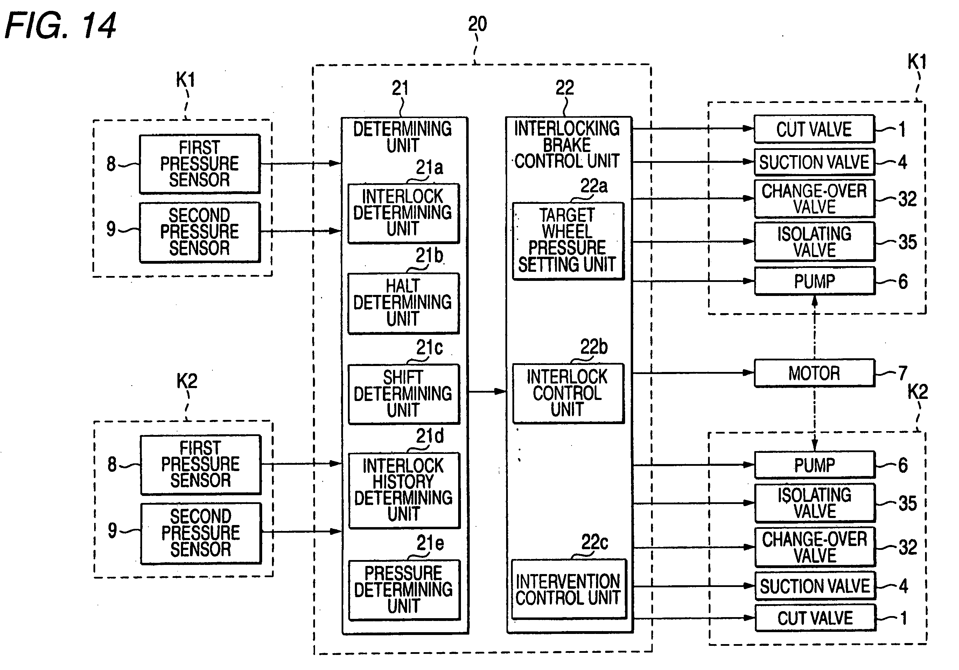

The interlocking brake control in the third embodiment is described in the following.
The interlocking brake control in the third embodiment is also executed, as shown in Fig. 14, by introducing the physical quantities such as the master pressure acquired by the first pressure sensor 8 and the wheel pressure acquired by the second pressure sensor 9, into the control unit 20 for functioning as the determining unit 21 and the interlocking brake control unit 22.

The determining unit 21 includes the interlock determining unit 21 a, the halt determining unit 21b, the shift determining unit 21c, the interlock history determining unit 21d and the pressure determining unit 21e. However, the functions of the individual determining units are similar to the aforementioned ones of the determining unit 21 of the first embodiment, and their detailed description is omitted.

The interlocking brake control unit 22 includes the target wheel pressure setting unit 22a, the interlock control unit 22b and the intervention control unit 22c. Here, the function of the target wheel pressure setting unit 22a is similar to that of the aforementioned interlocking brake control unit 22 of the first embodiment, and its detailed description is omitted.

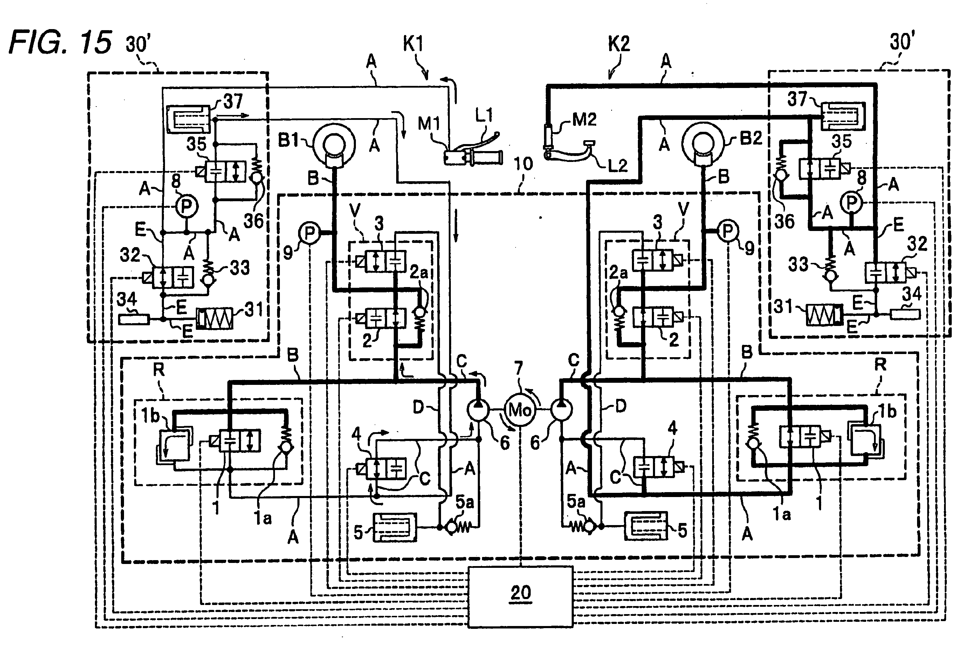

The interlock control unit 22b includes the aforementioned function described in the first embodiment and also a function to execute the control to open/close the change-over valve 32 of the brake line K1 (K2) which is target of the interlocking brake control, and the control to open/close the isolating valve 35.
More specifically, when it is determined the interlocking condition established, the interlock control unit 22b starts:
(1) the interlocking brake control including the control to close the cut valve 1, the control to open the suction valve 4, and the control to drive the pump 6 (the motor 7 in this embodiment) on the brake line K1 (K2) which is target of the interlocking brake control;
(2) the control to open the change-over valve 32 thereby to communicate the output hydraulic pressure passage A with the stroke simulator 31; and
(3) the control to close the isolating valve 35 thereby to isolate the reservoir chamber 37 from the master cylinder M1 (M2) (as referred to Fig. 15).
   Further, when it is determined by the interlock determining unit 21a that the ending condition established, the interlock control unit 22b executes

(1) the control to open the cut valve 1, the control to close the suction valve 4, and the control to stop the pump 6, on the brake line K1 (K2) which is target of the interlocking brake control, thereby to end the interlocking brake control,
(2) the control to close the change-over valve 32 thereby to execute the control to isolate the stroke simulator 31 from the output hydraulic pressure passage A, and the control to open the isolating valve 35 thereby to communicate the reservoir 37 with the master cylinder M1 (M2).

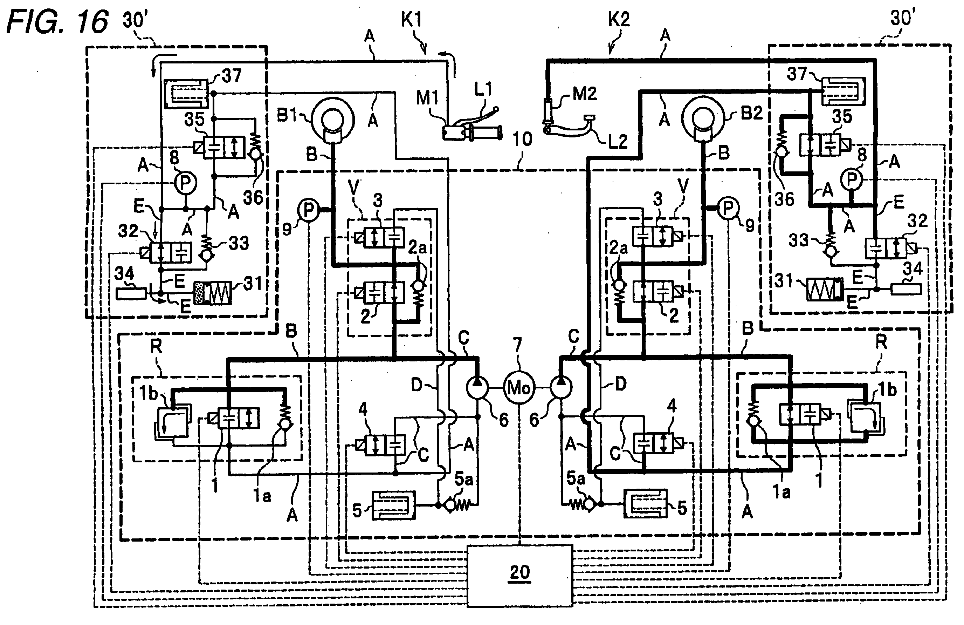

When the rear interlocking brake control is executed, for example, the pump 6 is driven, with the isolating valve 35 of the brake line K1 being closed, as shown in Fig. 15, to suck the brake fluid reserved in the reservoir 37. As a result, the brake hydraulic pressure to act on the wheel brake B1 is raised. Moreover, the control to open the change-over valve 32 of the brake line K1 is executed so that the brake fluid can be introduced into the stroke simulator 31. Therefore, when the brake operation element L1 corresponding to the brake line K1 is operated, the brake fluid flows into the stroke simulator 31 so that the operation reaction is applied by the stroke simulation (as referred to Fig. 16).

The intervention control unit 22c, as shown in Fig. 14, includes the aforementioned functions described in the first embodiment and also a function to execute the control to close the change-over valve 32 opened at the holding time of the interlocking condition, when the shift determining unit 21c determines that the shift condition established, thereby to isolate the stroke simulator 31 from the output hydraulic pressure passage A, and the control to open the isolating valve 35, closed when the interlinking condition establishes, thereby to communicate the reservoir 37 with the master cylinder M1 (M2). More specifically, when the shift condition establishes, the intervention control unit 22c executes the control to open the cut valve 1, the control to close the suction valve 4, the control to close the change-over valve 32 and the control to open the isolating valve, on the brake line K1 (k2) which is target of the interlocking brake control, and executes the control to keep the halt state on the pump 6 (the motor 7).

Here, the intervention control unit 22c executes the control to stop the pump 6 of the brake line K1 (K2) which is target of the interlocking brake control, when the pump halt condition establishes, as shown in Fig. 16, but executes the control to keep the closed state on the cut valve 1 and the isolating valve 35 closed at the instant when the interlocking condition establishes, but the control to keep the open state, on the suction valve 4 and the change-over valve 32 opened when the interlocking condition establishes. Therefore, after the pump halt condition established, the state for the brake fluid to flow into the stroke simulator 31 is kept, and the brake hydraulic pressure applied to the wheel brake B1 by the interlocking brake control is held. Further, when the shift condition establishes, the intervention control unit 22c executes the control to open the cut valve 1, the control to close the suction valve 4, the controls to close the change-over valve 32 and to open the isolating valve 35 and the control to stop continuously the pump 6 stopped when the pump halt condition establishes, on the brake line K1 (K2) or the target of the interlocking brake control. However, the intervention control unit 22d executes the control to keep the state (i.e., the halt state) on the pump 6 stopped when the pump halt condition established. Therefore, after the shift condition established, like the ordinary set state (the state of Fig. 13), in which the anti-lock brake control or the interlocking brake control is not executed, the brake hydraulic pressure according to the stroke of the brake operation element L1 is directly applied to the wheel brake B1 (B2).

Here in the state (the ordinary set state) where neither the anti-lock brake control nor the interlocking brake control is executed, the electromagnetic coil for driving the change-over valve 32 and the isolating valve 35 is demagnetized to close the change-over valve 32 and to open the isolating valve 35. If the driver operates the brake operation elements L1 and L2 when the control unit 20 selects the ordinary set state, the brake hydraulic pressure, as generated in the master cylinders M1 and M2, is directly applied to the wheel brakes B1 and B2 via the output hydraulic pressure passage A and the wheel hydraulic pressure passage B.

The operations of the brake hydraulic pressure control apparatus for the bar-handle vehicle thus constituted are described in detail with reference to Fig. 13 to Fig. 17.

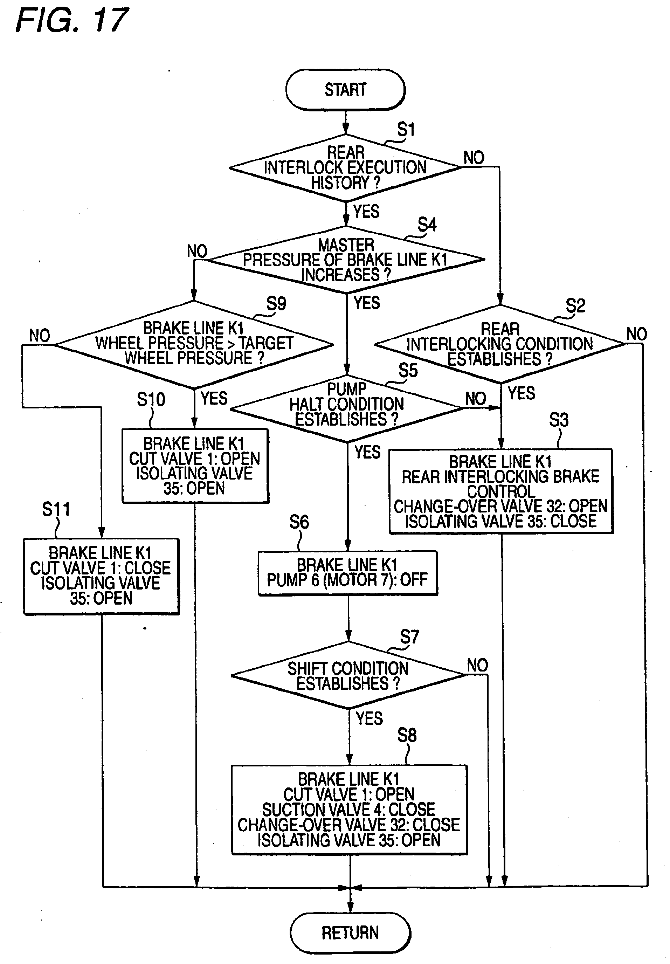

Here, the operations of the brake hydraulic pressure control apparatus for the bar-handle vehicle according to this embodiment is different, as shown in the control flow of Fig. 17, in that the control to open the change-over valve 32 of the brake line K1 which is target of the rear interlocking brake control and the control to close the isolating valve 35 are executed at Step S3, in that the control to close the change-over valve 32 of the brake line K1 and the control to close the isolating valve 35 are executed at Step S8, in that the control to open the isolating valve 35 of the brake line K1 is executed at Step S10, and in that the control to open the isolating valve 35 of the brake line K1 is executed at Step S10 and Step S11. The remaining points are similar to those of the control flow (as referred to Fig. 5), which have been described in the foregoing first embodiment, and their detailed description is omitted.

In this embodiment, when it is determined "Yes" at Step S2 that the rear interlocking condition establishes, the routine advances to Step S3, at which the target wheel pressure is set by the target wheel pressure setting unit 22a and at which the interlock control unit 22b executes the control to close the cut valve 1 of the brake line K1, the control to open the suction valve 4 and the control to drive the pump 6 (directly the motor 7). At the same time, the interlock control unit 22b executes the control to open the change-over valve 32 of the brake line K1 (i.e., the control to communicate the output hydraulic pressure passage A with the stroke simulator 31), and the control to close the isolating valve 35 (the control to isolate the reservoir 37 from the master cylinder M1). If the operation of the brake operation element L1 is performed after that, therefore, the brake fluid corresponding to the stroke extent of the brake operation element L1 flows into the stroke simulator 31, so that the operation reaction is applied to the brake operation element L1 by the stroke simulator 31.

When it is determined "Yes" at Step S5, while the rear interlocking brake control is being executed, that the pump halt condition established, the routine advances to Step S6, at which the control to stop the pump 6 (the motor 7 in this embodiment) of the brake line K1 is executed. Even after the pump halt condition established, on the cut valve 1, the suction valve 4, the change-over valve 32 and the isolating valve 35 of the brake line K1, however, the controls (i.e., the cut valve 1: close, the suction valve 4: open, the change-over valve 32: open, and the isolating valve 35: close) before the pump halt condition establishes are continuously executed. As a result, the brake hydraulic pressure, as applied to the wheel brake B1, is held, and the operation reaction according to the stroke extent is applied to the brake operation element L1 by the stroke simulator 31. Further, even after the pump halt condition established, the isolating valve 35 is closed. When the difference of the brake hydraulic pressure on the upstream side of the isolating valve 35 from the brake hydraulic pressure on the downstream side becomes the valve opening pressure of the second one-way valve 36 or higher, the brake fluid flows to the downstream side through the one-way valve, so that the brake hydraulic pressure on the downstream side of the isolating valve 35 also rises according to the stroke extent of the brake operation element L1.

When it is determined "Yes" at Step S7 that the shift condition establishes, the routine advances to Step S8, at which the control to open the cut valve 1 of the brake line K1, the control to close the suction valve 4, the control to close the change-over valve 32 (the control to isolate the stroke simulator 31 from the output hydraulic pressure passage A) and the control to open the isolating valve 35 (the control to communicate the reservoir 37 with the master cylinder M1) are executed, while the pump 6 of the brake line K1 is being stopped, by the intervention control unit 22c.

When the change-over valve 32 is closed at Step S8, the inflow of the brake fluid to the stroke simulator 31 is blocked, so that the artificial operation reaction is not applied to the brake operation element L1, but the isolating valve 35 is opened. At the instant when the brake hydraulic pressure of the master cylinder M1 is made larger to an extent of the opening extent of the check valve 1a than the brake hydraulic pressure applied to the wheel brake B1 by the rear interlocking brake control, the brake hydraulic pressure corresponding to the stroke extent of the brake operation element L1 is applied to the wheel brake B1. After this, therefore, the operation reaction, which is caused by applying the brake hydraulic pressure to the wheel brake B1, is applied to the brake operation element L1.

Even if the control to close the change-over valve 32 is not executed when the shift condition establishes, the brake hydraulic pressure is likewise applied to the wheel brake B1. If the control to close the change-over valve 32 is executed as in this embodiment, the brake fluid flows only into the wheel cylinder of the wheel brake B1 but not into the stroke simulator 31. As compared with the case, in which the change-over valve 32 is not closed when the shift condition establishes, therefore, it is possible to reduce the decreasing degree of the operation reaction of the brake operation element L1 and to keep the operation feeling satisfactory.

When it is determined "No" at Step S4 that the master pressure of the brake line K1 has not increased, and when it is determined "Yes" at Step S9 that the wheel pressure of the brake line K1 is not less than the target wheel pressure, the routine advances to Step S10, at which the control to open the cut valve 1 and the isolating valve 35 of the brake line K1 is opened by the intervention control unit 22c. When the cut valve 1 and the isolating valve 35 are opened, the brake hydraulic pressure to act on the wheel brake B1 is decreased as the stroke extent of the brake operation element L1 decreases.

When it is determined "No" at Step S9 that the wheel pressure is the target wheel pressure or lower, the routine advances to Step S11, at which the control to close the cut valve 1 of the brake line K1 and the control to open the isolating valve 35 are executed by the intervention control unit 22c. When the cut valve 1 is closed while the isolating valve 35 is opened, the wheel pressure decreases, while following the target wheel pressure.

Here, the brake fluid having flown into the stroke simulator 31 returns to the master cylinder M1 through the change-over valve 32, when the operating force of the brake operation element L1 is weakened before the shift condition establishes. When the operating force of the brake operation element L1 is weakened after the shift condition establishes, the brake hydraulic pressure of the output hydraulic pressure passage A returns to the master cylinder M1 through the one-way valve 33, after it becomes lower than the brake hydraulic pressure in the stroke simulator 31.

According to the brake hydraulic pressure control apparatus for the bar-handle vehicle of the third embodiment thus described, while the interlocking brake control is being executed, the output hydraulic pressure passage A is closed by the isolating valve 35. Therefore, till the pump 6 is stopped, the transmission of the pulsations of the pump 6 to the brake operation element L1 (L2) corresponding to the brake line K1 (K2) which is target of the interlocking brake control can be completely isolated. In this embodiment, too, when the brake operation element L1 (L2) corresponding to the brake line K1 (K2) is operated after the interlocking brake control was executed on the brake line K1 (YC2), the operation reaction is applied by the stroke simulator 31 to the brake operation element L1 (L2) before the shift condition establishes, and the operation reaction is applied to the brake operation element L1 (L2) by the brake hydraulic pressure applied to the wheel brake B1 (B2), after the shift condition establishes. Therefore, the operation feeling like that at the ordinary braking operation with no interlocking brake control can be given to the driver. Here, the operation reaction of the brake operation element L1 (L2) is not wholly simulated by the stroke simulator 31, so that the stroke simulator 31 can be reduced in size.

Moreover, the isolating valve 35 is closed when the interlocking brake control is started, and the brake fluid reserved in the reservoir 37 is used only for the interlocking brake control. Therefore, the size of the reservoir 37 can be made smaller than that of the case (that is, the "full by-wire" case), in which the brake hydraulic pressure is also raised by the pump when in the ordinary brake operation time. In short, the capacity of the reservoir 37 may be so large as can reserve the brake fluid used for the interlocking brake control.

Further, in this embodiment, the second one-way valve 36 for allowing only the inflow of the brake fluid from the upstream side to the downstream side is disposed in parallel with the isolating valve 35. If a brake hydraulic pressure not less than the opening pressure of the second one-way valve 36 is generated by the operation of the brake operation element L1, the brake fluid can be fed to the downstream side even when the isolating valve 35 is in the closed state. Further, when the isolating valve 35 is in the open state, the brake fluid can be introduced to the downstream side through not only the isolating valve 35 but also the second one-way valve 36, thereby to improve the raising response and the raising rate of the brake hydraulic pressure.

In the aforementioned third embodiment, the isolating valve 35 is kept closed even when the pump halt condition establishes. It is, however, arbitrary to execute the control to open the isolating valve 35.

## Claims

1. A brake hydraulic pressure control apparatus for a bar-handle vehicle, comprising:
two brake lines (K1; K2) including hydraulic pressure passages leading from master cylinders (M1; M2) to wheel brakes (B1; B2) for generating brake hydraulic pressures according to stroke extents of brake operation elements (L1; L2);
a determining unit (21) which determines whether or not it is necessary to apply the brake hydraulic pressure to the wheel brake (B1) corresponding to the other of the brake line (K1) in response to an operation of the brake operation element (L2) corresponding to one of the brake line (K2); and
an interlocking brake control unit (22) which executes an interlocking brake control on the other of the wheel brake lines (K1) when the determining unit (21) determines that it is necessary to apply the brake hydraulic pressure to the other of the wheel brakes (B1),
at least the other of the brake lines (K1) of the brake hydraulic pressure control apparatus includes:
a regulator (R) having a cut valve (1) for opening/closing the hydraulic pressure passage (A, B);
a suction passage (C) bypassing the regulator (R);
a pump (6) disposed in the suction passage (C) for sucking brake fluid on a master cylinder side and discharging the brake fluid to a wheel brake side; and
a suction valve (4) for opening/closing the suction passage (C) on a suction side of the pump (6);
**characterized in that**
the determining unit (21) also determines that a pump halt condition has established, when a physical quantity correlating to the brake hydraulic pressure of the master cylinder (M1) corresponding to the other of the brake lines (K1) which is target of the interlocking brake control becomes a threshold or higher and,
the interlocking brake control unit (22) executes a control to close the cut valve (1), a control to open the suction valve (4) and a control to drive the pump (6) as the interlocking brake control, and when the determining unit (21) determines that the pump halt condition has established, the interlocking brake control unit (22) executes a control to stop the driven pump (6).

2. The brake hydraulic pressure control apparatus for the bar-handle vehicle, as set forth in claim 1, wherein
the regulator (R) is configured to allow inflow of the brake fluid from the master cylinder side to the wheel brake side when the brake hydraulic pressure on the master cylinder side is higher than the brake hydraulic pressure on the wheel brake side; and
when the brake hydraulic pressure of the master cylinder (M1) in the other of the brake lines (K1) which is target of the interlocking brake control becomes the brake hydraulic pressure applied to the wheel brake (B1) of the other of the brake lines (K1) by the interlocking brake control or higher, the brake hydraulic pressure corresponding to the stroke extent of the brake operation element (L1) corresponding to the other of the brake lines (K1) is applied to the wheel brake (B1) corresponding to the other of the brake lines (K1).

3. The brake hydraulic pressure control apparatus for the bar-handle vehicle, as set forth in claim 2, wherein
the determining unit (21) determines that a shift condition establishes when a physical quantity correlating to the brake hydraulic pressure of the master cylinder (M1) of the other of the brake lines (K1) reaches a physical quantity correlating to the brake hydraulic pressure applied to the wheel brake (B1) of the other of the brake line (K1) and
the interlocking brake control unit (22) executes a control to close the suction valve (4) opened by the interlocking brake control, when the determining unit (21) determines that the shift condition has established.

4. The brake hydraulic pressure control apparatus for the bar-handle vehicle, as set forth in claim 2, wherein
at least the other of the brake lines (K1) includes:
a stroke simulator (31) or applying an operation reaction of the brake operation element (L1) corresponding to the other of the brake line (K1) artificially to the brake operation element (L1);
a branch passage (E) leading from the hydraulic pressure passage (A) closer to the master cylinder side than the regulator (R), to the stroke simulator (31); and
a change-over valve (32) for opening/closing the branch passage (E);
the determining unit (21) determines that a shift condition establishes, when a physical quantity correlating to the brake hydraulic pressure of the master cylinder (M1) of the other of the brake lines (K1) reaches a physical quantity correlating to the brake hydraulic pressure applied to the wheel brake (B1) of the other of the brake lines (K1), and
when the interlocking brake control is started, the interlocking brake control unit (22) opens the change-over valve (32) to execute a control to communicate the hydraulic pressure passage (A) with the stroke simulator (31), and when the determining unit (21) determines that a shift condition has established, the interlocking brake control unit (22) closes the change-over valve (32) to execute a control to isolate the stroke simulator (31) from the hydraulic pressure passa (A).

5. The brake hydraulic pressure control apparatus for the bar-handle vehicle, as set forth in claim 4, wherein
the other of the brake lines (K1) includes a one-way valve (33) disposed in parallel with the change-over valve (32), for allowing only inflow of the brake fluid from the stroke simulator side to the master cylinder side.

6. The brake hydraulic pressure control apparatus for the bar-handle vehicle, as set forth in claim 4 or 5, wherein
the other of the brake lines (K1) includes:
an isolating valve (35) for opening/closing the hydraulic pressure passage on a side closer to the regulator than a connection point between the hydraulic pressure passage (A) and the branch passage (E), and
a reservoir (37) connected to the hydraulic pressure passage (A) on a regulator side closer to the isolating valve (35), and side closer to the isolating valve (35), and
when the interlocking brake control is started, the interlocking brake control unit (22) executes a control to close the isolating valve (35) to isolate the reservoir (37) from the master cylinder (M1) of the other of the brake lines (K1) and when the determining unit (21) determines that the pump halt condition has established, the interlocking brake control unit (22) executes a control to communicate the reservoir (37) with the master cylinder (M1) of the other of the brake lines (K1).

7. The brake hydraulic pressure control apparatus for the bar-handle vehicle, as set forth in claim 6, wherein
the other of the brake lines (K1) includes a one-way valve (36) disposed in parallel with the isolating valve (35), for allowing only the inflow of the brake fluid from the master cylinder side to the regulator side.

## Patentansprüche

1. Hydraulische Bremsdrucksteuervorrichtung für ein Fahrzeug mit Lenkstange mit:
zwei Bremsleitungen (K1; K2) mit hydraulischen Druckkanälen, die von Hauptzylindern (M1; M2) zu Radbremsen (B1; B2) führen, sodass hydraulische Bremsdrücke gemäß Hüben von Bremsbetätigungselementen (L1; L2) erzeugt werden;
einer Festlegungseinheit (21), die festlegt, ob es notwendig ist, den hydraulischen Bremsdruck auf die Radbremse (B1), die zu der anderen der Bremsleitungen (K1) gehört, in Antwort auf eine Betätigung des Bremsbetätigungselements (L2), das zu der einen der Bremsleitungen (K2) gehört, auszuüben; und
einer Blockadebremssteuereinheit (22), die eine Blockadebremssteuerung an der anderen der Radbremsleitungen (K1) ausführt, wenn die Festlegungseinheit (21) festlegt, dass es notwendig ist, den hydraulischen Bremsdruck auf die andere der Radbremsen (B1) auszuüben,
mindestens die andere der Bremsleitungen (K1) der hydraulischen Bremsdrucksteuervorrichtung weist auf:
einen Regler (R) mit einem Trennventil (1) zum Öffnen/Schließen der hydraulischen Druckkanäle (A, B);
einen Ansaugkanal (C), der den Regler (R) umgeht;
eine Pumpe (6), die in dem Ansaugkanal (C) zum Ansaugen von Bremsflüssigkeit an einer Hauptzylinderseite und Abführen der Bremsflüssigkeit zu einer Radbremsenseite angeordnet ist; und
ein Ansaugventil (4) zum Öffnen/Schließen des Ansaugkanals (C) an einer Ansaugseite der Pumpe (6);
**dadurch gekennzeichnet, dass**
die Festlegungseinheit (21) ferner festlegt, dass eine Pumpenstillstandsbedingung gebildet ist, wenn eine physikalische Größe in Korrelation zu dem hydraulischen Bremsdruck des Hauptzylinders (M1), der zu der anderen der Bremsleitungen (K1) gehört, die Ziel der Blockadebremssteuerung ist, einen Grenzwert oder einen höheren Wert annimmt und,
die Blockadebremssteuereinheit (22) eine Steuerung ausführt, um das Trennventil (1) zu schließen, eine Steuerung, um das Ansaugventil (4) zu öffnen, und eine Steuerung, um die Pumpe (6) als Blockadebremssteuerung anzutreiben, und wenn die Festlegungseinheit (21) festlegt, dass die Pumpenstillstandsbedingung gebildet ist, die Blockadebremssteuereinheit (22) eine Steuerung ausführt, um die angetriebene Pumpe (6) anzuhalten.

2. Hydraulische Bremsdrucksteuervorrichtung für ein Fahrzeug mit Lenkstange nach Anspruch 1, bei welcher
der Regler (R) so gestaltet ist, dass ein Einfließen der Bremsflüssigkeit von der Hauptzylinderseite zu der Radbremsenseite erlaubt ist, wenn der hydraulische Bremsdruck auf der Hauptzylinderseite höher als der hydraulische Bremsdruck auf der Radbremsenseite ist; und
wenn der hydraulische Bremsdruck des Hauptzylinders (M1) in der anderen der Bremsleitungen (K1), die Ziel der Blockadebremssteuerung ist, den hydraulischen Bremsdruck, der auf die Radbremse (B1) der anderen der Bremsleitungen (K1) durch die Blockadebremssteuerung ausgeübt wird, oder einen höheren Druck annimmt, der hydraulische Bremsdruck, der zu der Hüben des Bremsbetätigungselements (L1) gehört, das zu der anderen der Bremsleitungen (K1) gehört, auf die Radbremse (B1) ausgeübt wird, die zu der anderen der Bremsleitungen (K1) gehört.

3. Hydraulische Bremsdrucksteuervorrichtung für ein Fahrzeug mit Lenkstange nach Anspruch 2, bei der
die Festlegungseinheit (21) festlegt, dass eine Schaltbedingung gebildet ist, wenn eine physikalische Größe in Korrelation zu dem hydraulischen Bremsdruck des Hauptzylinders (M1) der anderen der Bremsleitungen (K1) eine physikalische Größe in Korrelation zu dem hydraulischen Bremsdruck erreicht, der auf die Radbremse (B1) der anderen der Bremsleitungen (K1) ausgeübt wird; und
die Blockadebremssteuereinheit (22) eine Steuerung ausführt, um das Ansaugventil (4) zu schließen, das durch die Blockadebremssteuerung geöffnet worden ist, wenn die Festlegungseinheit (21) festlegt, dass die Schaltbedingung gebildet ist.

4. Hydraulische Bremsdrucksteuervorrichtung für ein Fahrzeug mit Lenkstange nach Anspruch 2, bei der
mindestens die andere der Bremsleitungen (K1) ferner aufweist:
einen Hubsimulator (31) zum künstlichen Ausüben einer Betätigungsreaktion des Bremsbetätigungselements (L1), das zu der anderen der Bremsleitungen (K1) gehört, auf das Bremsbetätigungselement (L1);
einen Verzweigungskanal (E), der von dem hydraulischen Druckkanal (A), der näher an der Hauptzylinderseite als der Regler (R) ist, zu dem Hubsimulator (31) führt;
und ein Umschaltventil (32) zum Öffnen/Schließen des Verzweigungskanals (E);
die Festlegungseinheit (21) legt fest, dass eine Schaltbedingung gebildet ist, wenn eine physikalische Größe in Korrelation zu dem hydraulischen Bremsdruck des Hauptzylinders (mol) der anderen der Bremsleitungen (K1) eine physikalische Größe in Korrelation zu dem hydraulischen Bremsdruck erreicht, der auf die Radbremse (B1) der anderen der Bremsleitungen (K1) ausgeübt wird; und
wenn die Blockadebremssteuerung gestartet wird, die Blockadebremssteuereinheit (22) das Umschaltventil (32) öffnet, sodass eine Steuerung ausgeführt wird, um den hydraulischen Druckkanal (A) mit dem Hubsimulator (31) zu verbinden, und wenn die Festlegungseinheit (21) festlegt, dass eine Schaltbedingung gebildet ist, die Blockadebremssteuereinheit (22) das Umschaltventil (32) schließt, sodass eine Steuerung ausgeführt wird, um den Hubsimulator (31) von dem hydraulischen Druckkanal (A) abzutrennen.

5. Hydraulische Bremsdrucksteuervorrichtung für ein Fahrzeug mit Lenkstange nach Anspruch 4, bei der
die andere der Bremsleitungen (K1) ein Einwegventil (33) aufweist, das parallel zu dem Umschaltventil (32) angeordnet ist, sodass nur ein Einfließen der Bremsflüssigkeit von der Hubsimulatorseite zu der Hauptzylinderseite erlaubt ist.

6. Hydraulische Bremsdrucksteuervorrichtung für ein Fahrzeug mit Lenkstange nach Anspruch 4 oder 5, bei der
die andere der Bremsleitungen (K1) aufweist:
ein Absperrventil (35) zum Öffnen/Schließen des hydraulischen Druckkanals auf einer Seite, die näher an dem Regler als ein Verbindungspunkt zwischen dem hydraulischen Druckkanal (A) und dem Verzweigungskanal (E) ist, und
ein Reservoir (37), das mit dem hydraulischen Druckkanal (A) auf einer Reglerseite verbunden ist, die näher an dem Absperrventil (35) ist, und
wenn die Blockadebremssteuerung gestartet wird, die Blockadebremssteuereinheit (22) eine Steuerung ausführt, um das Absperrventil (35) zum Abtrennen des Reservoirs (37) von dem Hauptzylinder (M1) der anderen der Bremsleitungen (K1) abzutrennen, und wenn die Festlegungseinheit (21) festlegt, dass die Pumpenstillstandsbedingung gebildet ist, die Blockadebremssteuereinheit (22) eine Steuerung ausführt, um das Reservoir (37) mit dem Hauptzylinder (M1) der anderen der Bremsleitungen (K1) zu verbinden.

7. Hydraulische Bremsdrucksteuervorrichtung für ein Fahrzeug mit Lenkstange nach Anspruch 6, bei der
die andere der Bremsleitungen (K1) ein Einwegventil (36) aufweist, das parallel zu dem Absperrventil (35) angeordnet ist, sodass nur das Einfließen der Bremsflüssigkeit von der Hauptzylinderseite zu der Reglerseite erlaubt ist.

## Revendications

1. Appareil de commande de pression hydraulique de frein pour un véhicule à guidon, comprenant :
deux canalisations de frein (K1 ; K2) incluant des passages de pression hydraulique conduisant depuis des maîtres cylindres (M1 ; M2) à des freins de roue (B1 ; B2) pour générer des pressions hydrauliques de frein selon des étendues de course d'éléments de mise en oeuvre de frein (L1 ; L2) ;
une unité de détermination (21) qui détermine s'il est vraiment nécessaire d'appliquer la pression hydraulique de frein au frein de roue (B1) correspondant à l'autre des canalisations de frein (K1) en réponse à une mise en oeuvre de l'élément de mise en oeuvre de frein (L2) correspondant à une des canalisations de frein (K2) ; et
une unité de commande de frein à action solidarisée (22) qui exécute une commande de frein à action solidarisée sur l'autre des canalisations de frein de roue (K1) quand l'unité de détermination (21) détermine qu'il est nécessaire d'appliquer la pression hydraulique de frein à l'autre des freins de roue (B1),
au moins l'autres des canalisations de frein (K1) de l'appareil de commande de pression hydraulique de frein inclut:
un régulateur (R) ayant une vanne de coupure (L) pour ouvrir / fermer les passages de pression hydraulique (A, B) ;
un passage d'aspiration (C) contournant le régulateur (R) ;
une pompe (6) disposée dans le passage d'aspiration (C) pour aspirer un liquide de freins sur un côté maître cylindre et décharger le liquide de freins vers un côté frein de roue ; et
une vanne d'aspiration (4) pour ouvrir / fermer le passage d'aspiration (C) sur un côté aspiration de la pompe (6) ;
**caractérisé en ce que**
l'unité de détermination (21) détermine également qu'une condition d'arrêt de pompe a été établie, quand une quantité physique, se corrélant à la pression hydraulique de frein du maître cylindre (M1) correspondant à l'autre des canalisations de frein (K1) qui est une cible de la commande de frein à action solidarisée, devient un seuil ou plus et,
l'unité de commande de frein à action solidarisée (22) exécute une commande pour fermer la vanne de coupure (1), une commande pour ouvrir la vanne d'aspiration (4) et une commande pour entraîner la pompe (6) en tant que commande de frein à action solidarisée, et quand l'unité de détermination (21) détermine que la condition d'arrêt de pompe a été établie, l'unité de commande de frein à action solidarisée (22) exécute une commande pour arrêter la pompe entraînée (6).

2. Appareil de commande de pression hydraulique de frein pour le véhicule à guidon, selon la revendication 1, dans lequel
le régulateur (R) est configuré pour permettre un afflux du liquide de freins en provenance du côté maître cylindre vers le côté frein de roue quand la pression hydraulique de frein côté maître cylindre est supérieure à la pression hydraulique de freinage côté frein de roue ; et
quand la pression hydraulique de frein du maître cylindre (M1) dans l'autre des canalisations de frein (K1) qui est cible de la commande de frein à action solidarisée devient la pression hydraulique de freinage appliquée au frein de roue (B1) de l'autre des canalisations de frein (K1) par la commande de frein à action solidarisée ou plus, la pression hydraulique de frein correspondant à l'étendue de course de l'élément de mise en oeuvre de frein (L1) correspondant à autres des canalisations de frein (K1) est appliquée au frein de roue (B1) correspondant à l'autre des canalisations de frein (K1).

3. Appareil de commande de pression hydraulique de frein pour le véhicule à guidon, selon la revendication 2, dans lequel
l'unité de détermination (21) détermine qu'une condition de décalage s'établit quand une quantité physique se corrélant à la pression hydraulique de frein du maître cylindre (M1) de l'autre des canalisations de frein (K1) atteint une quantité physique se corrélant à la pression hydraulique de frein appliquée au frein de roue (B1) de l'autre des canalisations de frein (K1) ; et
l'unité de commande de frein à action solidarisée (22) exécute une commande pour fermer la vanne d'aspiration (4) ouverte par la commande de frein à action solidarisée, quand l'unité de détermination (21) détermine que la condition de décalage a été établie.

4. Appareil de commande de pression hydraulique de frein pour le véhicule à guidon, selon la revendication 2, dans lequel
au moins l'autre des canalisations de frein (K1) inclut en outre :
un simulateur de course (31) pour appliquer une réaction de mise en oeuvre de l'élément de mise en oeuvre de frein (L1), correspondant à l'autre de la canalisation de frein (K1), artificiellement à l'élément de mise en oeuvre de frein (L1),
un passage ramifié (E) conduisant du passage de pression hydraulique (A) plus proche du côté maître cylindre que le régulateur (R), jusqu'au simulateur de course (31), et
une vanne de retournement (32) pour ouvrir / fermer le passage ramifié (E) ;
l'unité de détermination (21) détermine qu'une condition de décalage s'établit, quand une quantité physique se corrélant à la pression hydraulique de frein du maître cylindre (M1) de l'autre des canalisations de frein (K1) atteint une quantité physique se corrélant à la pression hydraulique de frein appliquée au frein de roue (B1) de l'autre des canalisations de frein (K1), et
lorsque la commande de frein à action solidarisée est débutée, l'unité de commande de frein à action solidarisée (22) ouvre la vanne de retournement (32) pour exécuter une commande pour faire communiquer le passage de pression hydraulique (A) avec le simulateur de course (31), et lorsque l'unité de détermination (21) détermine qu'une condition de décalage a été établie, l'unité de commande de frein à action solidarisée (22) ferme la vanne de retournement (32) pour exécuter une commande pour isoler le simulateur de course (31) du passage de pression hydraulique (A).

5. Appareil de commande de pression hydraulique de frein pour le véhicule à guidon, selon la revendication 4, dans lequel
l'autre des canalisations de frein (K1) inclut une vanne de non-retour (33) disposée en parallèle avec la vanne de retournement (32), pour permettre seulement un afflux du liquide de freins en provenance du côté simulateur de course vers le côté maître cylindre.

6. Appareil de commande de pression hydraulique de frein pour le véhicule à guidon, selon la revendication 4 ou 5, dans lequel
l'autre des canalisations de frein (K1) inclut :
une vanne d'isolement (35) pour ouvrir / fermer le passage de pression hydraulique sur un côté plus proche du régulateur qu'un point de connexion entre le passage de pression hydraulique (A) et le passage ramifié (E), et
un réservoir (37) relié au passage de pression hydraulique (A) sur un côté régulateur plus proche de la vanne d'isolement (35), et
lorsque la commande de frein à action solidarisée est débutée, l'unité de commande de frein à action solidarisée (22) exécute une commande pour fermer la vanne d'isolement (35) pour isoler le réservoir (37) du maître cylindre (M1) de l'autre des canalisations de frein (K1) et lorsque l'unité de détermination (21) détermine que la condition d'arrêt de pompe a été établie, l'unité de commande de frein à action solidarisée (22) exécute une commande pour faire communiquer le réservoir (37) avec le maître cylindre (M1) de l'autre des canalisations de frein (K1).

7. Appareil de commande de pression hydraulique de frein pour le véhicule à guidon, selon la revendication 6, dans lequel
l'autre des canalisations de frein (K1) inclut une vanne de non-retour (36) disposée en parallèle avec la vanne d'isolement (35) pour permettre seulement un afflux du liquide de freins en provenance du côté maître cylindre vers le côté régulateur.
